# EUROPEAN PATENT APPLICATION

(11) **EP 2 068 278 A2**
(43) Date of publication of application: **10.06.2009**
(21) Application number: 08170571.7
(22) Date of filing: 08.05.2007
(51) Int. Cl.: G06Q 40/00

(54) **Data storage and processor for storing and processing data associated with derivative contracts and trades related to derivative contracts**

(30) Priority: 08.05.2006 US 798556 P
(62) Divisional of application: 07797373.3
(71) Applicant: The Depository Trust&Clearing Corporation, New York NY 10041-0099 (US)
(72) Inventor: Axilrod, Peter, New York, NY 10128 (US)
(74) Representative: Greene, Simon Kenneth

(57) **Abstract**

The description generally describes systems and methods for managing derivative contracts. The system maintains derivative contract states using a set of rules to ensure subsequent post-trade events are applied in the correct order, and without jeopardizing the integrity of the underlying derivative contract. Data about derivative contracts maintained in other environments can be back-loaded into the system to allow all of a user's contracts to be contained within the system, and data associated with the back-loaded contracts can be governed in the same fashion as existing derivative contracts. Payment processing and settlement can be handled automatically by the system. If a derivative contract in the system has an uncertain state, payment processing on the derivative contract can be initiated by either trading counterparty using payment processing logic.

## Description

### TECHNICAL FIELD

The description herein relates to a data storage and processor for storing and processing data associated with derivative contracts and trades related to derivative contracts.

### BACKGROUND

Derivative contracts can generally be divided into two broad categories: exchange-traded derivative contracts and over-the-counter (OTC) derivative contracts. Exchange-traded derivative contracts are traded through specialized derivative exchanges that act as an intermediary for all related transactions. In contrast, OTC derivative contracts are privately negotiated and traded directly between the parties to the contract and their successors or assignees. OTC derivative contracts, in general, can include swaps, forward rate agreements, exotic options, equities, foreign exchanges (FX), and/or commodities. Credit derivative contracts are a type of OTC derivative contract used to allow trading/hedging of credit risk, and can include total return swaps, credit default swaps, and/or credit linked notes.

Two related trends are changing the credit derivative contract market. The first trend is rapid growth in trading volumes, development of a robust secondary market, proliferation of new standard trade types, and rapid expansion of market participation to traditional and non-traditional asset managers, as well as insurance, pension and corporate money managers. The second trend is a rapid spread of automated trade confirmation and standardization efforts. There are concerns about the operational ability of the trading parties and counter parties to credit derivative contracts to efficiently administer credit derivative contracts throughout the life of the contracts with respect to, for example, payment, credit event and assignment processing on any asynchronous basis.

Generally, parties to OTC derivative contracts can administer derivative contracts between themselves on a bilateral basis. This means parties are burdened with constantly "syncing up" data about the derivative contracts and trade events during the life of each derivative contract. Parties "sync up" data not only for accurate reporting of positions and balance sheets, for example, but also to correctly process credit events, payments, margin calls, contract assignments, and/or the like. These "sync up" processes today involve significant human involvement and duplicative reconciliation or resolution processes, both internally at a trader (e.g. a dealer) and between firms (e.g. dealer-dealer or dealer-customer). In addition, each party to a contract is subject to its counterparties' own internal processing. This can be problematic because counterparties' abilities and sophistication can vary, effectively giving control over the derivative contract to the counterparty having the most primitive means.

Bilateral interaction between the parties can be time consuming due to verbal or ad hoc trade checkouts, portfolio substantiation, tie outs, cash flow reconciliation, modification of assignment through email, and investigation of derivative contract breaks (e.g. non-matching derivative contract records). Bilateral interaction can also be costly, for example, with overhead included in nostro fees (e.g. a turnover fee), nostro breaks, collateral processing, party disputes and investigations, and substantial capital requirements due to inefficient derivative contract dissolutions and portfolio management. Bilateral interaction creates inherent risk, which is compounded by non-standardized systems for storing and processing data. For example, risk exists for a firm in maintaining a correct balance sheet, especially with financial reporting, market risk management, and counterparty credit risk management. Other risks include credit event management such as ad hoc reconciliation and non-standardized data and messaging. These risks are often a result of inaccurate or out-of-date data.

### SUMMARY

Accordingly, it is desirable to provide a data storage and processing facility to store and process data which simplifies and corrects downstream processing flows automatically based on verified data in the storage and processing facility.

The present application provides a data storage and processing facility to store and process data for derivative contract downstream processing. The data storage and processing facility maintains derivative contract states using a set of rules to ensure subsequent post-trade events are applied in the correct order without jeopardizing the integrity of the underlying derivative contract or data associated therewith. Derivative contracts previously maintained in other environments can be back-loaded into the data storage and processing facility to allow all of a user's derivative contracts to be contained within the system. Once in the system, back-loaded contracts can be governed in the same fashion as existing derivative contracts. A party to a derivative contract can initiate payment processing, and the data storage and processing facility notifies the derivative contract parties affected by the transaction. Payment processing and settlement can be handled automatically by the data storage and processing facility. If a derivative contract in the system has an uncertain state and can not be processed by the data storage and processing facility, payment processing can be initiated by trading counterparties for a derivative contract.

In general, in one aspect, the invention features a computer system. The computer system includes a first computer data storage module to store a first signal indicative of a first trade event for a first derivative contract and a set of rules. The computer system includes a first data processor module to receive the first signal. The computer system includes a second data processor module to determine whether the first trade event is associated with an existing derivative contract or with a new derivative contract. The computer system includes a third data processor module to assign a first unique identifier to the first derivative contract if the trade event is associated with a new derivative contract. The computer system includes a fourth data processor module to associate a set of rules with the first derivative contract. The computer system includes a fifth data processor module to determine a current state of the first derivative contract based on information stored in the computer data storage or the set of rules.

In general, in another aspect, the invention features a back-loading system. The back-loading system includes a first data processor module to receive a signal associated with a derivative contract not previously stored in a computer data storage. The back-loading system includes a second data processor module to assign at least one of a unique identifier or an effective date to the derivative contract. The back-loading system includes a data storage module to store data associated with the derivative contract.

In general, in another aspect, the invention features a method. The method involves receiving a first signal indicative of a first trade event for a first derivative contract. The method involves determining whether the first trade event is associated with an existing derivative contract or a new derivative contract. The method also involves assigning a first unique identifier to the first derivative contract if the first trade event is associated with a new derivative contract. The method involves associating a set of rules with the first derivative contract and determining a current state of the first derivative contract based on at least one of information stored in a computer data storage or the set of rules.

In general, in another aspect, the invention features a computer program product, tangibly embodied in an information carrier, the computer program product including instructions being operable to cause a data processing apparatus to receive a signal indicative of a trade event for a derivative contract. The computer program product includes instructions operable to cause a data processing apparatus to determine whether the signal is associated with an existing derivative contract or with a new derivative contract. The computer program product includes instructions operable to cause a data processing apparatus to assign a unique identifier to the trade event if the trade event is associated with a new derivative contract. The computer program product includes instructions being operable to cause a data processing apparatus to associate a set of rules with the derivative contract and to cause a data processing apparatus to determine a current state of the derivative contract based on information stored in a computer data storage or the set of rules.

In general, in another aspect, the invention features a system. The system includes a data storage means for storing a signal indicative of a trade event for a derivative contract and a set of rules. The system includes a first data processing means for receiving the signal. The system includes a second data processing means for determining whether the trade event is associated with an existing derivative contract or a new derivative contract. The system includes a third data processing means for assigning a unique identifier to the trade event if the trade event is associated with a new derivative contract. The system includes a fourth data processing means for associating a set of rules with the derivative contract. The system includes a fifth data processing means for determining a current state of the derivative contract based on at least one of information stored in a computer data storage, or the set of rules, or both.

In other embodiments, any of the above aspects can include one or more of the following features. In some embodiments, a sixth data processor module receives a second signal associated with a second derivative contract not previously stored in the computer data storage. A seventh data processor module can be adapted to assign at least one of a second unique identifier or an effective date to the second derivative contract. A second computer data storage module can store the second derivative contract, effective date, second unique identifier, or any combination of these. In some embodiments, a seventh data processor module is adapted to associate one or more subsequent trade events with the second derivative contract based on either the effective date, the one or more subsequent trade events, the set of rules, or any combination of these.

In some embodiments, a computer data processor includes multiple data processor modules, e.g. including the first data processor module, second data processor module, third data processor module, fourth data processor module, fifth data processor module, or any combination of these. In some embodiments, a computer data processor comprises the first data processor module and second data processor module.

The current state can include at least one of an unconfirmed state, an alleged state, a certain state, a confirmed state, or any combination of these. In some embodiments, the current state is determined to be the uncertain state when the first trade event causes a notional amount to become less than zero.

In some embodiments, a party to the first derivative contract is notified of the current state, and the current state is changed from the uncertain state in response to either receipt of a subsequent trade event or receipt of corrective information. The set of rules includes a general validation rule or a special validation rule. In some embodiments, the general validation rule includes a rule adapted to verify a trade date is not a future date, verify a first payment date is not earlier than the trade date, verify one or more post-trade dates will occur on or after an original trade date, verify one or more post-trade effective dates will occur on or after an original trade effective date, verify one or more post-trade event payable dates will not occur before one or more corresponding post-trade trade dates, or any combination of these.

In some embodiments, the special validation rule includes a rule adapted to queue the first trade event if the first trade event was received before the current state of the first derivative contract is in a confirmed state or to release the first trade event from the queue upon receiving a second signal causing the current state of the first derivative contract to be the confirmed state.

A second signal indicative of a second trade event not associated with a second derivative contract in the computer data storage can be received. In some embodiments, the second trade event is refused (e.g. not accepted). In some embodiments, the set of rules is stored in the computer data storage.

The first trade event can include a new trade, a partial termination of the first derivative contract, a full termination of the first derivative contract, a partial assignment of the first derivative contract, a full assignment of the first derivative contract, a partial novation of the first derivative contract, a full novation of the first derivative contract, an increase in the obligation of the first derivative contract, an amendment to the terms of the first derivative contract, an exit of the first derivative contract, or any combination of these.

In some embodiments, the amendment does not change an identity of a party to the first derivative contract. An assignment can include a novated amount comprising a first amount that is less than or equal to an amount of the first derivative contract, a second amount that is a sum of one or more amounts of one or more amounts inputted by one or more parties and is less than or equal to a notional amount, or any combination of these.

In some embodiments the first derivative contract is an over-the-counter derivative contract. In some embodiments, the over-the-counter derivative contract is a credit derivative contract.

A second signal can be received where the second signal is associated with a second derivative contract not previously stored in the computer data storage. In some embodiments, a second unique identifier or an effective date is assigned to the second derivative contract. The second derivative contract can be stored in the computer data storage.

In some embodiments, a set of subsequent trade events is associated with the second derivative contract based on the effective date, the set of subsequent trade events, the set of rules, or any combination of these.

The effective date can be agreed-upon by two or more parties to the second derivative contract. In some embodiments, the second signal includes one or more trade events dated on or before the effective date. The second signal does not always include one or more trade events dated after the effective date.

In some embodiments, the system one or more signals indicative of a subsequent trade event for the second derivative contract where the subsequent trade event has an effective date preceding the effective date of the second derivative contract are refused acceptance.

In general, in one aspect, the invention features computer system. The computer system includes a computer data storage module to store information associated with a plurality of derivative contracts. The computer system includes a first data processor module to identify, based on a criterion, a first set of derivative contracts of the plurality of derivative contracts stored in the computer data storage. The computer system includes a second data processor module to identify a subset of derivative contracts from the first set of derivative contracts. The computer system includes a third data processor module to send a notification based on a change in a set of parameters at a predetermined time to one or more parties to a derivative contract from the subset of derivative contracts. The computer system includes a user interface module in communication with the data processor to communicate information received from a user via a template to the data processor.

In another aspect, the invention relates to a method. The method involves identifying, based on a criterion, a first set of derivative contracts stored in a computer data storage. The method involves identifying a subset of derivative contracts from the first set of derivative contracts. The method involves transmitting a notification based on a change in a set of parameters at a predetermined time to one or more parties to a derivative contract of the subset of derivative contracts.

In another aspect, the invention relates to a computer program product, tangibly embodied in an information carrier, the computer program product including instructions being operable to cause a data processing apparatus to identify, based on a criterion, a first set of derivative contracts stored in a computer data storage. The computer program product includes instructions operable to cause a data processing apparatus to identify a subset of derivative contracts from the first set of derivative contracts and to send a notification based on a change in a set of parameters at a predetermined time to one or more parties to a derivative contract of the subset of derivative contracts.

In another aspect, the invention features a system. The system includes a data storage means for storing information associated with a derivative contract. The system includes a first data processing means for identifying, based on a criterion, a first set of derivative contracts stored in the computer data storage. The system includes a second data processing means for identifying a subset of derivative contracts from the first set of derivative contracts. The system includes a third data processing means for sending a notification based on a change in a set of parameters to one or more parties to a derivative contract of the subset of derivative contracts. The system includes a communication means to communicate information received from a user via a template to the data system.

In some embodiments, any of the aspects above can include one or more of the following features. In some embodiments, the user interface module includes a graphical user interface module, a spreadsheet module, a computer-to-computer interface module, or any combination of these. A fourth data processor module can be configured to generate a second set of flagged contracts specific to a first user or one or more additional users, where the first user or additional users are parties to at least one derivative contract in the subset of derivative contracts. The fourth data processor module can also be configured to assign a determination date upon transmitting the notification. The determination date is indicative of the date on which a response to the notification is required. In some embodiments, a computer data processor comprises the first data processor module, the second data processor module, and the third data processor module.

In some embodiments, the criterion includes the set of parameters. The criterion can be a credit event. The notification can be transmitted in response to the flag.

Some embodiments feature information being received from a user in a template through an interface. The first set of derivative contracts can be identified in response to a query by the user. In some embodiments, the information entered into the template comprises data external to the computer data storage, publicly available information, a credit event, or any combination of these. Examples of credit events include bankruptcy, failure to pay an owed amount, restructuring of a derivative contract, or any combination of these.

In some embodiments, the interface encompasses a graphical user interface, a spreadsheet, a computer-to-computer interface, or any combination of these. A signal indicative of a trade event can be received and a second set of contracts can be flagged by a first user or additional users and can be generated in response to the signal.

A trade event can include a user request, a lapse of time, a criterion being satisfied, or any combination of these. In some embodiments, a second subset of derivative contracts specified by a user or additional users is generated and the first user or additional users is a party to at least one contract in the second subset of contracts.

In some embodiments, the notification is associated with the subset of derivative contracts or the information entered into a template. The first set of derivative contracts can be over-the-counter derivative contracts. Examples of over-the-counter derivative contracts includes credit derivative contracts.

In general, in one aspect, the invention features a computer system. The computer system includes a first data processor module to receive a first signal from a first party to a derivative contract. The first signal is indicative of a request to initiate processing of a payment owed on the derivative contract where the derivative contract is in an unconfirmed state. The computer system includes a second data processor module to transmit a second signal to a second party to the derivative contract. The second signal is indicative of a request for acceptance of processing of payment. The computer system includes a third data processor module to receive a third signal indicative of an acceptance from the second party. The computer system includes a fourth data processor module to verify that a first derivative contract record and a second derivative contract record are associated with the derivative contract. The fourth data processor module also verifies that the first derivative contract record and second derivative contract record are associated with a common derivative contract event. The computer system includes a fifth data processor module to transmit a fourth signal to the first party and second party of the derivative contract indicative of initiating payment. The computer system includes a sixth data processor module to calculate a payment owed between the first party and second party based on the derivative contract. The computer system includes a first computer data storage module to store information associated with the derivative contract.

In another aspect, the invention features a method. The method involves receiving a first signal from a first party of a derivative contract. The he first signal is indicative of a request to initiate processing of payment owed on the derivative contract where the derivative contract is in an unconfirmed state. The method involves transmitting a second signal to a second party of the derivative contract. The second signal is indicative of a request for acceptance of processing of payment. The method also involves, in response to receiving a third signal indicative of an acceptance from the second party, verifying that a first derivative contract record and a second derivative contract record are associated with the derivative contract or the first derivative contract record. The method involves determining that the second derivative contract record corresponds to a common derivative contract event. The method involves transmitting a fourth signal to the first party and second party of the derivative contract indicative of initiating payment processing. The method involves calculating a payment owed between the first party and second party based on the derivative contract.

In another aspect, the invention features a computer program product, tangibly embodied in an information carrier, the computer program product including instructions being operable to cause a data processing apparatus to receive a first signal from a first party of a derivative contract. The first signal is indicative of a request to initiate processing of a payment owed on the derivative contract where the derivative contract is in an unconfirmed state. The computer program product includes instructions operable to cause a data processing apparatus to transmit a second signal to a second party of the derivative contract. The second signal is indicative of a request for acceptance of processing of payments. The computer program product includes instructions operable to cause data processing apparatus to, in response to receiving a third signal indicative of an acceptance from the second party, verify that the first derivative contract record and second derivative contract record are associated with the same derivative contract or that the first derivative contract record and second derivative contract record correspond to a common derivative contract event. The computer program product includes instructions operable to cause data processing apparatus to transmit a fourth signal to the first party and second party of the derivative contract. The computer program product includes instructions being operable to cause data processing apparatus to calculate a payment owed between the first party and second party based on the derivative contract.

In another aspect, the invention features a system. The system includes a first data processing means for receiving a first signal from a first party of a derivative contract. The first signal is indicative of a request to initiate processing of a payment owed on the derivative contract where the derivative contract is in an unconfirmed state. The system includes a second data processing means for transmitting a second signal to a second party of the derivative contract. The second signal is indicative of a request for acceptance of processing of payment. The system includes a third data processing means for receiving a third signal indicative of an acceptance from the second party. The system includes a fourth data processing means for verifying that the first derivative contract record and second derivative contract record are associated with the derivative contract or that the first derivative contract record and second derivative contract record correspond to a common derivative contract event. The system includes a fifth data processing means for transmitting a fourth signal to the first party and second party of the derivative contract. The system includes a sixth data processing means for calculating a payment owed between the first party and second party based on the derivative contract. The system includes a data storage means for storing trade information associated with an over the counter derivative contract.

In other examples, any of the aspects above can include one or more of the following features. A unique identifier can be assigned to the first and second derivative contract records (e.g. by a seventh data processor). The unique identifier can be stored in a second data storage. A second computer data storage can be configured to store the unique identifier.

The seventh data processor module can be configured to transmit a fifth signal to the initiating party indicative of the rejection in response to the third signal being indicative of a rejection of processing by the second party.

In some embodiments, the payment is calculated based on an obligation in the first or second derivative contract record where the first or second contract record is a legally reliable record in a confirmed state. A fifth signal is received from a first party or an additional party indicative of a cash flow for a non-legal derivative contract record. In some embodiments, an eighth data processor module verifies the cash flow is associated with an existing non-legal derivative contract record in the first computer data storage. In some embodiments, the cash flow is matched (e.g. by a ninth data processor module).

In some embodiments a payment is calculated by associating a first field specified in a derivative trade record. Payment can be calculated by netting two or more amounts payable by the second party to the first party on the derivative contract where the two or more amounts payable have the same payment date. In some embodiments, the derivative contract is accessible to a custodian or administrator of the first or second party for making the payment.

In some embodiments, a computer data processor includes multiple data processor modules, such as the first data processor module, the second data processor module, the third data processor module, the fourth data processor module, the fifth data processor module, and the sixth data processor module.

The derivative contract can be an over-the-counter derivative contract. The over-the-counter derivative contract can be a credit derivative contract. In some embodiments, the derivative contract event includes a new trade, a partial termination of the derivative contract, a full termination of the derivative contract, a partial assignment of the derivative contract, a full assignment of the derivative contract, a partial novation of the derivative contract, a full novation of the derivative contract, an increase of the derivative contract, an amendment to the terms of the derivative contract, an exit of the derivative contract, or any combination of these.

In some embodiments, a unique identifier is assigned to the first derivative contract record and second derivative contract record. In some embodiments, a fifth signal is transmitted to the first party indicative of the rejection in response to the third signal being indicative of a rejection of processing by the second party.

The first derivative contract record and second derivative contract record can be in an unconfirmed state (e.g. prior to payment processing) due to an unconfirmed trade event, a confirmed trade event received out-of-order, or any combination of these.

In some embodiments, the payment is calculated based on an obligation in a derivative contract record where the contract record being a legally reliable record in a confirmed state. A fifth signal can be received from a first party or any other party, where the fifth signal is indicative of a cash flow for a non-legal derivative contract record. In some embodiments, the cash flow is verified to be associated with an existing non-legal derivative contract record in a computer data storage. In some embodiments, the cash flow is matched.

In some embodiments, the non-legal derivative contract record is associated with a derivative contract record not constituting a legally reliable record. The payments can be settleable by a coupon, a fee, a one-time premium, an up-front payment, or any combination of these.

In some embodiments, calculating involves associating a field specified in a derivative trade record. Calculating can involve associating a field specified in the derivative contract record or netting two or more amounts payable by the second party to the first party for the derivative contract where the two or more amounts payable have the same payment date.

The derivative contract can be accessible to a custodian or administrator of the first or second party to make the payment. In some embodiments, the custodian or administrator acts on behalf of the first or second party to the derivative contract in making the payments.

The details of one or more examples are set forth in the accompanying drawings and the description below. Further features, aspects, and advantages of the invention will become apparent from the description, the drawings, and the claims.

### BRIEF DESCRIPTION OF THE DRAWINGS

FIG. 1 is a view of a system for carrying out principles of a data storage and processing facility embodying the system.
FIG. 2 is a block diagram of the logical components of the data storage facility of FIG. 1.
FIG. 3 is a data flow diagram illustrating data flow in a derivative contract processing and storage system.
FIG. 4 is an exemplary data structure for storing and processing data associated with a derivative contract.
FIG. 5 is a screen shot of an exemplary display for use in the system of FIG. 1.
FIG. 6 is an exemplary user interface for entry of data by a trading counterparty in the system of FIG. 1.
FIG. 7 is a flow chart depicting exemplary processing of a signal indicative of a trade event for a derivative contract.
FIG. 8 is a flow chart depicting exemplary processing of a signal indicative of a trade event for a derivative contract in an unconfirmed state.
FIG. 9 is a flow chart depicting illustrative processing of a signal indicative of a derivative contract that is not previously stored.
FIG. 10A is a block diagram of an exemplary system for processing a credit event notification.
FIG. 10B is an exemplary data structure for processing queries of derivative contracts in a database.
FIG. 10C is an exemplary user interface allowing a user to specify a set of derivative contracts for notification processing.
FIG. 11 is a block diagram illustrating exemplary data flow for payment processing.
FIG. 12 is a flow chart depicting a payment process for a derivative contract.
FIG. 13 is a flow chart depicting a verification process initiated by the payment of processing of FIG. 12.

### DETAILED DESCRIPTION

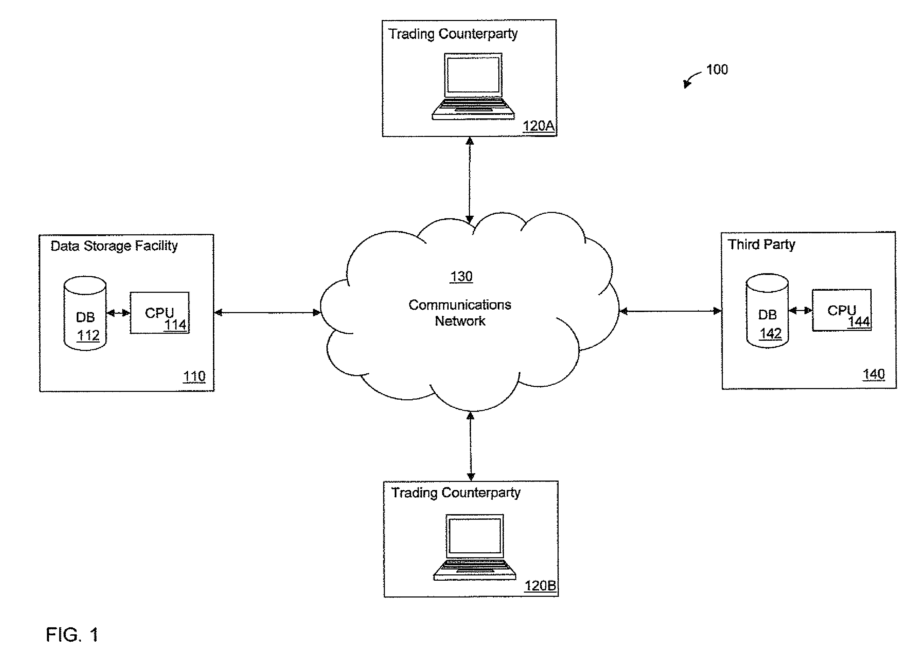

FIG. 1 depicts a view of a system 100 for carrying out principles of the processes described herein. The system 100 includes a data storage facility 110. The data storage facility 110 provides data storage and processing for the system 100, including, automated post trade support for over-the-counter (OTC) derivative contracts. Although the description refers to OTC derivative contracts and associated events generally as "derivative contracts" and "credit events," the data storage facility 110 may support swaps, forward rate agreements, exotic options, equities, foreign exchanges (FX), commodities, and various other types of OTC derivative contracts. The data storage facility 110 includes a database 112 in communication with a central processing unit (CPU) 114. The system 100 also includes two trading counterparties 120A and 120B that communicate with each other, the data storage facility 110, and a third party 140 over a communication network 130.

The CPU 114 can include an interface (not shown) that is accessible over the communications network 130 to the trading counterparties 120A & 120B and the third party 140. The interface can be, for example, a web-based interface that allows interested parties to provide data to the database 112 or view data stored in the database 112. An example of a suitable interface is the DTCC Deriv/SERV service offered DTCC Deriv/SERV, a wholly owned subsidiary of Depository Trust & Clearing Corporation of New York, New York. Deriv/SERV is an interface that provides matching and confirmation for approximately 80% of all global credit default swaps. The data storage facility 110 stores data associated with one or more derivative contracts in the database 112. Examples of data stored in the database 112 includes the contract date, a unique contract identifier, payment information, settlement information, trading counterparties, the contract state, and/or the like.

The contract state is associated with the current status of the derivative contract from the perspective of the data storage facility 110. For example, if one trading counterparty 120A submits data (e.g. via a signal) to the data storage facility 110 but the trading counterparty 120B has not verified the information (e.g. via a verification signal), the derivative contract state is associated with an uncertain contract state. After the trading counterparty 120B verifies the data from the first trading counterparty 120A, the CPU 114 updates the derivative contract state to show the derivative contract has been verified based on a verification signal sent from 120B. The CPU 114 interacts with the data storage facility 110 via instructions and commands based on signals received over the communications network 130. The data storage facility 110 can also store data associated with derivative contract position maintenance, derivative contract back-loading, derivative contract credit event processing, derivative contract payment processing, maintaining the contract state of the derivative contract, and/or the like.

Trading counterparty 120A and trading counterparty 120B, collectively trading counterparties 120, communicate with the data storage facility 110 through the communication network 130. The communication network 130 can be over a local area network (LAN), a wide area network (WAN), the Internet, a public or private network, the public switched telephone network (PSTN), and can include both wired and wireless networks, or any other communication network. The system 100 also includes a third party 140 in communication with the data storage facility 110 via the communications network 130. The third party 140 includes a CPU 142 in communication with a database 144.

The third party could be, for example, an agent to a trading counterparty 120, a custodian of the trading counterparty 120, an administrator of the trading counterparty 120, or a vendor unrelated to the trading counterparty 120 offering complementary services to the trading counterparty 120. The third party 140 can be acting, for example, on behalf of one of the trading counterparties 120 or the trading counterparty's customers. The CPU 142 of the third party 140 can send a signal to the data storage facility 110 to make payments on a derivative contract, provide verification of credit event data stored in the database 144 to the data storage facility 110, transfer instructions or a signal to the data storage facility 110 from a Nostro account, back-load derivative contracts to the data storage facility 110, or transmit other signals that can change data in the data storage facility 110. The database 144 can store, for example, Nostro account information, log-in privileges for the data storage facility 110, public records of credit events, or other information or data useful for data processing in the system 100.

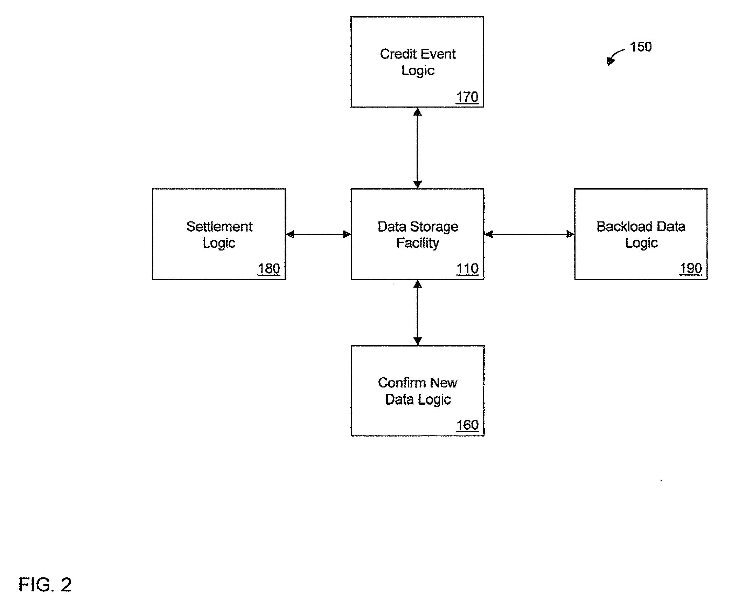

FIG. 2 is a block diagram of a logical system 150 of the data storage facility 110 of FIG. 1. The logical system 150 includes a confirm new data logic module 160 component. The confirm new data logic module 160 can be stored in the database 112 and executed on the CPU of the data storage facility 110. The confirm new data logic module 160 handles the receipt of signals at the data storage facility 110 and can apply information from the signal to an existing derivative contract stored in the database 112 or create a new derivative contract entry in the database 112. The credit event logic module 170 can be stored in the database 112 and executed on the CPU of the data storage facility 110. The credit event logic module 170 handles the receipt of signals at the data storage facility 110 indicative of credit event occurrences which trigger derivative contract association rules stored in the database 112.

The logical system 150 includes a settlement logic module 180 component and a back-load data logic module 190 component, which can be stored in the database 112 and executed by the CPU of the data storage facility 110. The settlement logic module 180 component can facilitate, for example, initiation of initiate payment processing on derivative contracts stored in the database 112 between trading counterparties 120 and verification of payments upon receipt of the appropriate signal at the data storage facility 110. The back-load data logic 190 component allows a trading counterparty 120 to load (or store) data associated with previously un-stored derivative contract records into the data storage facility 110. Upon back-loading data associated with a derivative contract through the back-load data logic module 190, the data storage facility 110 (e.g. through the CPU 114) can apply the credit event logic 170, settlement logic 180, and confirm new data logic 160 to the back-loaded derivative contract, for example, upon receipt of new signals related to the back-loaded derivative contract.

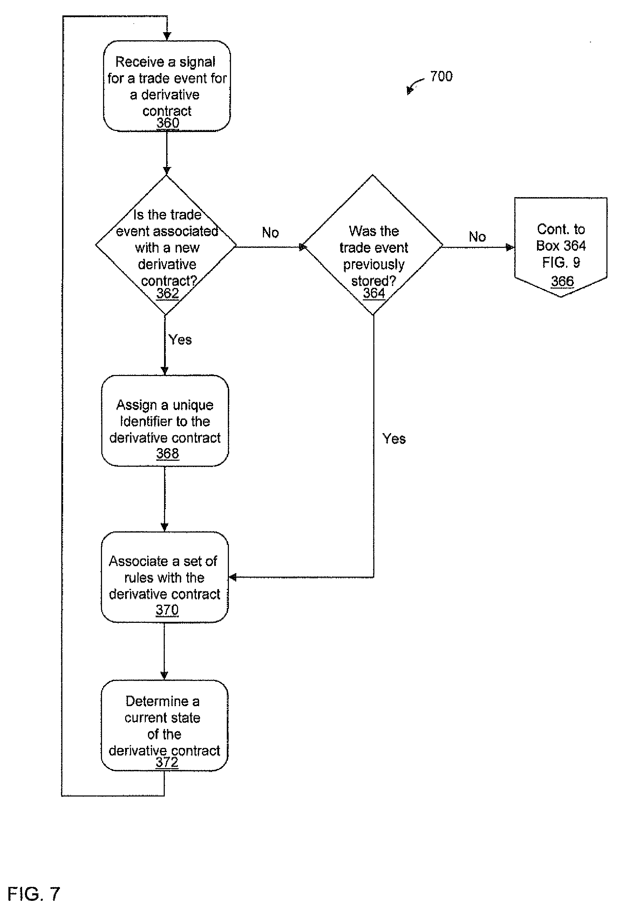

The confirm new data logic module 160 can include, for example, steps or instructions to query or search the database 112 to determine if a received signal is associated with a currently stored derivative contract in the database 112. The new data logic module 160 can also assign a unique reference identifier to the signal (or information carried by the signal) if the signal is not associated with a derivative contract stored in the database 112. The new data logic module 160 can also handle the receipt of signals for a derivative contract that are received in the wrong order. The new data logic module 160 can also maintain a representation of the current state of the derivative contract. For example, when a new derivative contract is submitted to the data storage facility 110 by a trading counterparty 120, data associated with the derivative contract is received and processed by the CPU 114, which can assign a unique identifier to the data and store it in the database 112. Derivative contract state maintenance is further discussed with reference to FIGS. 7-8.

The CPU 114 uses the credit event logic 170 upon receipt of a new credit event at the data storage facility 112. For example, the data storage facility 112 can receive data associated with the new credit event. The CPU 114 processes the data (e.g. credit event) using the credit event logic module 170 record, updates the underlying derivative contract record accordingly, and stores the updated derivative contract record in the database 112. The data storage facility 110 can also maintain, for example, both full legal records and non-legal records of derivative contracts. Full legal records can, for example, be relied upon as a legal embodiment of the derivative contract since the derivative can be legally confirmed. Legal records are important because they can be accessed by a third party 140 (e.g. outside auditors) and relied on as a full legal embodiment of the derivative contract. An exemplary list of the derivative contract records which can be confirmed legally and are stored in the data storage facility 110 are depicted below in Table 1:

**TABLE 1**

| **Trade Type** | **Legal Record** | **Tie-out Record** |
|---|---|---|
| Credit Default Swap | YES | NO |
| Credit Default Index | YES | NO |
| Tranche | YES | NO |
| Credit Default Index Pay as you go | YES | NO |
| Others | NO | YES |

Referring to Table 1, the "Trade Type" column gives an exemplary list of different credit derivative contracts. The "Trade Type" column identifies types of trades stored in the database 112. The "Legal Record" column designates whether the corresponding "Trade Type" is a legal record. An entry of "YES" can be indicative that a trade type can be legally confirmed. An entry of "NO" can be indicative that a trade type can not be legally confirmed. The "Tie-out Record" column identifies whether the corresponding "Trade Type" is a tie-out, or non-legal, record. An entry of "YES" indicates that the data record is a tie-out record. An entry of "NO" in this column indicates the trade type is not a legal record.

For the first "Trade Type," a "CDS," or credit default swap, can be a single name CDS traded under the International Swaps and Derivatives Association, Inc. (ISDA), which is a global trade association for OTC derivative contracts. The CDS can be traded, for example, under the ISDA Master Confirmation Agreements or the ISDA Physical Settlement Matrix. A "vanilla" CDS, for example, is a more simple, well-understood trade option which is more clearly defined through industry standards than other CDS transactions. The CDS can be embodied in, for example, the 2003 ISDF Credit Derivatives Definitions, which are intended for use in confirmations of individual transactions of CDS events. CDS trade types are typically legal records (e.g. legally confirmable by a third party).

The second "trade type" in the table is a credit default index, or "CD Index." CD Indexes can be traded under, for example, standardized Master Confirmation Agreements or Standard Terms Supplements published by an index sponsor, such as the "Supplement to the 1999 ISDA Credit Derivatives Definitions on Successor and Credit Events for Credit Derivatives." There are generally two main families of CD Indexes, for example, such as CDX, which includes or lists North American and Emerging Market companies, and iTraxx, which contain companies from the rest of the world. CD Index trades are typically legal records and not tie-out records.

A "Tranche" trade type is, for example, one of several related scrutinized bonds offered as part of the same deal, which together make up what is often referred to as the deal's capital structure or liability structure. A tranche is a legal record and not a tie-out record. A "CD Index Pay as you go" trade type, is, for example, a CD Index involving ongoing, bilateral payments between trading counterparties (e.g. buyer and seller). The CD Index can be based on, for example, CMBX, which is a group of indices consisting of twenty-five commercial mortgage backed securities (CMBS) tranches. The CD Index can be, for example, the ABX index which represents a group of credit default swaps on high-risk mortgages and home equity loans. "Pay as you go" CD Indexes are typically legal records and not tie-out records.

"Other" trade types are typically not legally confirmable and are depicted as "tie-out" records. A "tie-out" record, for example, can be a derivative contract that is not yet fully supported by the data storage facility 110, but may become a full legal record upon full support for the particular derivative being implemented in the data storage facility 110. Non-legal records can include, for example, a commercial mortgage backed securities (CMBS), an asset backed security (ABS), a Credit Derivative on Loan, Collateralized Debt Obligation (CDO), and/or a Credit Default Swap (CDS) Option.

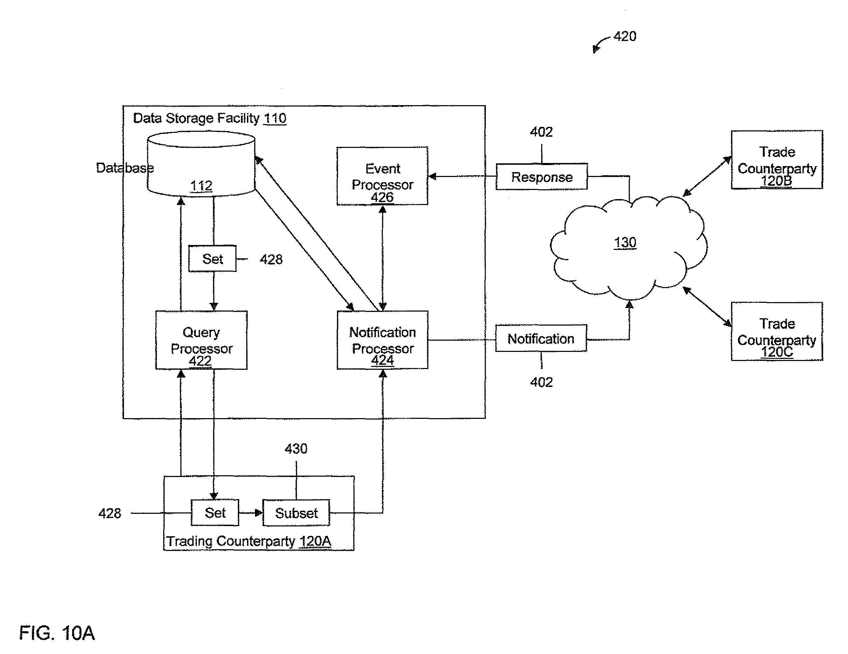

Referring to FIG. 2, when a credit event is triggered (e.g., by a signal sent from a counter party 120 to the data storage facility 110 over the communication network 130) a payment is due by a trading counterparty 120. Both trading counterparties 120A, 120B are notified of the event occurrence. Upon the data storage facility 110 receiving the payment from the first trading counterparty 120A, the CPU 114 processes the payment, updates the database record for the particular derivative contract, stores the updated derivative contract information in the database 112, and notifies the trading counterparties 120A, 120B of successful payment processing. Derivative contract credit event processing is further discussed below with reference to FIGS. 10A-10C.

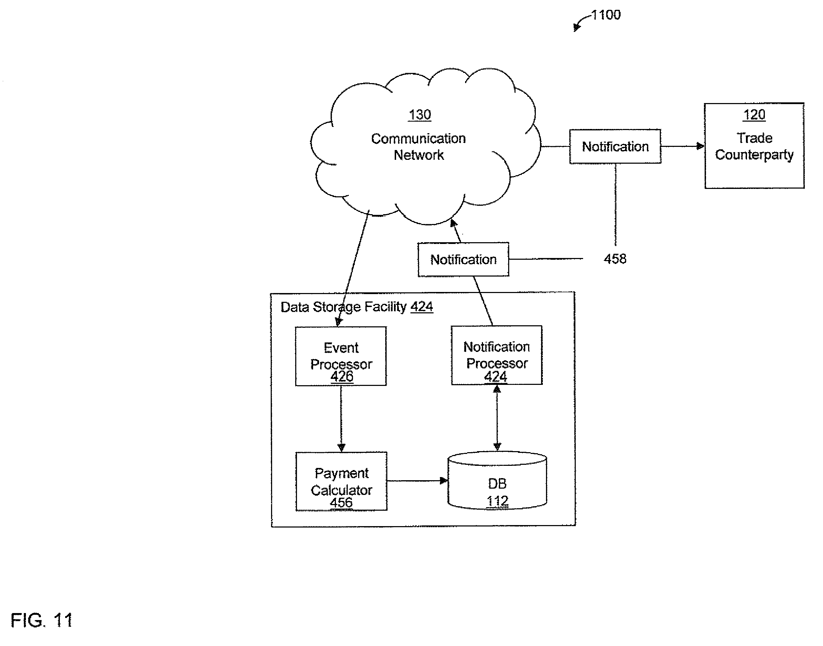

The settlement logic module 180 is used, for example, when a trading counterparty 120 initiates payment processing for a derivative contract stored in the data storage facility 110 when the data storage facility does not automatically initiate payment processing, based on, e.g., the contract state stored in the database 112. For example, if a derivative contract record is in an uncertain state, trading counterparty 120A can initiate payment by sending a signal to the data storage facility 110 indicative of a payment request. The CPU 114 can use the settlement logic module 180 to handle the payment request. The settlement logic module 180 can direct the CPU 114 to notify the trading counterparties 120A, 120B of the payment request by transmitting signals or messages to the trading counterparties 120. The payment process is further discussed below in FIGS. 11-13.

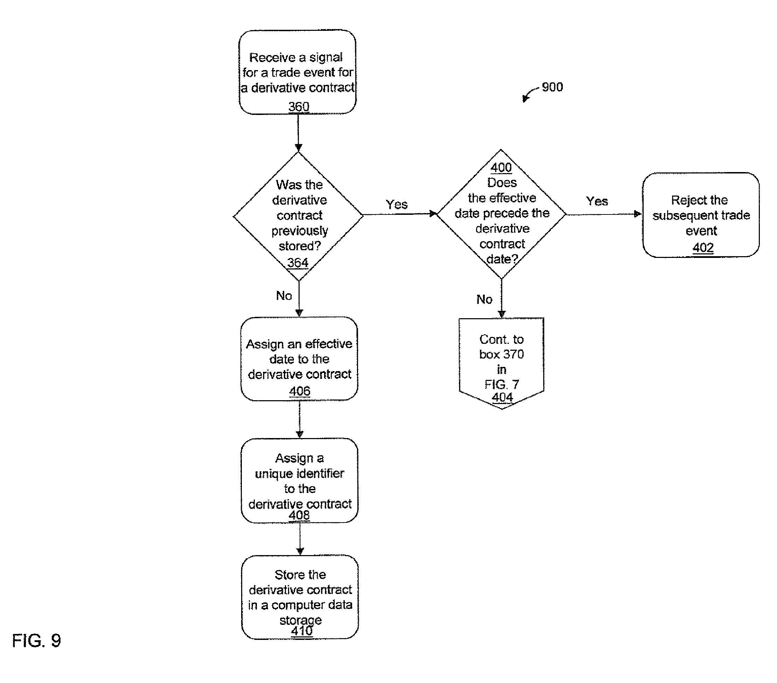

The back-load data logic module 190 is executed by the CPU 110 upon receipt of data associated with a derivative contract not yet stored in the data storage facility 110. A derivative contract can be back-loaded, e.g., by either the trading counterparty 120 or a third party 140. For example, a trading counterparty 120 can send data associated with the derivative contract to the data storage facility 110. The derivative contract is then processed by the CPU 114 using the back-load data logic module 190, and the CPU 114 stores the record of the back-loaded derivative contract in the database 112. The back-load data logic module 190 can include instructions or functions related to, for example, verifying the derivative contract is not stored in the database 112, assigning a unique trade identifier to the derivative contract data, setting or establishing the contract state of the back-loaded derivative contract, or assigning a back-load effective date to the back-loaded derivative contract. Derivative contract back-loading is further discussed below with reference to FIG. 9.

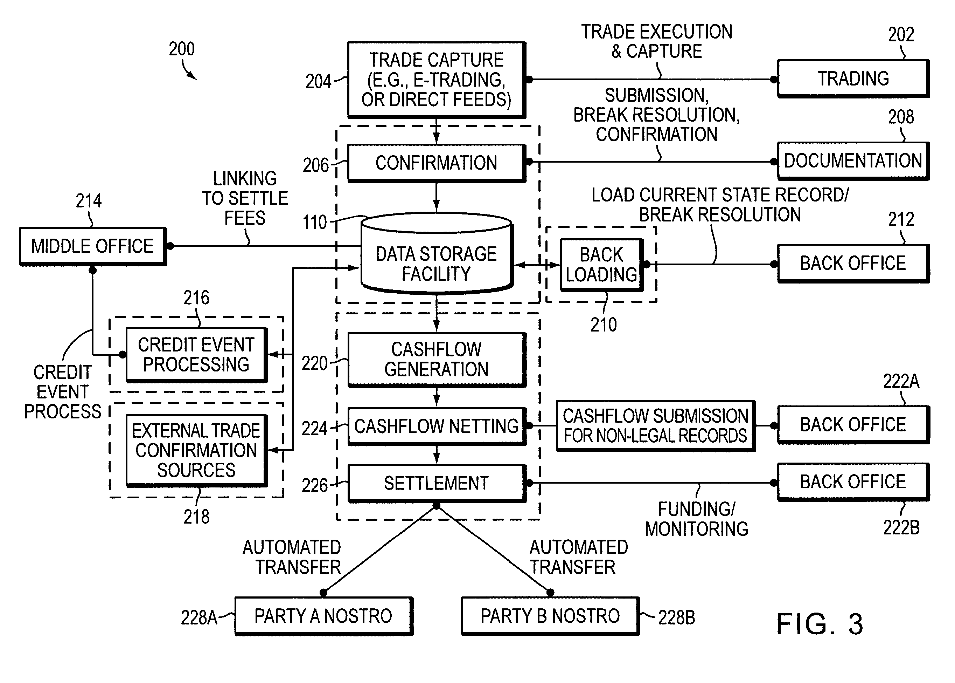

FIG. 3 is a data flow diagram 300 illustrating an example of data flow in a derivative contract processing and storage system 200. The system 200 can incorporate components or modules from FIGS. 1 and 2. The system 200 includes the data storage facility 110 of FIG. 1. The trading block 202 represents a derivative contract that is traded between trading counterparties (e.g. the trading counterparties 120 of FIG. 1). After the derivative contract and terms are agreed-upon, data associated with the derivative contract is captured (e.g., by the trade capture block 204). The derivative contract trade can be confirmed electronically in the confirmation block 206. The trading counterparties can transmit documentation 208 for support at the confirmation block 206, which can include, for example, third-party references, publicly available information (PAI), and confirmation templates.

The system 200 includes a back-loading block 210, which involves loading current state records of previously-executed derivative contract trades from a back office 212. The back-loading block 210 transmits or feeds data to the data storage facility 110. A middle office 214 is connected to the data storage facility 110 to facilitate, for example, linking derivative contract records or data to settle fees. The middle office 214 can also facilitate participation in credit event processing 216. External trade confirmation sources 218 can be used in conjunction with the credit event processing block 216 to verify derivative contract post-trade events and data. For example, in response to a credit event, the data storage facility 110 calculates the resulting payments due on the derivative contract in the cash flow generation block 220. The cash flow generation block 220 calculates payments due for derivative contracts depending on the contract state or type. In some embodiments, the cash flow generator 220 calculates payments automatically in response to receiving a signal from a trading counterparty.

Derivative contracts that do not qualify for automatic payment calculation through the cash flow generation unit 220 can be submitted from a back office 222A to the cash flow netting block 224. The cash flow notification netting block 224 can net multiple payments due for a particular trading counterparty on one or more derivative contracts. The cash flow netting block 224 transmits data to the settlement block 226 to resolve payments between the trading counterparties to the derivative contract. The settlement block 226 is monitored by a back office 222B. The back office 222B can in some embodiments be both independent from the back office 222A, located at the same back office or computer system. The back office 222B can also transmit payments to the settlement block 226. Additionally, the settlement block 226 can facilitate data associated with transfers from the party A nostro 228A and the party B nostro 228B, collectively party nostros 228. In some embodiments, the settlement block 226 facilitates automated transfer to allow for easy cash management without foreign currency conversion.

The data storage facility 110 can maintain data associated with the current state of multiple derivative contracts. Legally confirmable new trades that are electronically confirmed through the confirmation block 206 or submitted to the data storage facility 110 through the back-loading block 210 can be considered new contracts or data. For full legal records, the data storage facility 110 can calculate settlement values for derivative contracts in a confirmed current state 282 through the cash flow generation block 220 of FIG. 3, net settlements in the cash flow netting block 224, and manage the settlements in the settlement block 226. The data storage facility 110 can use the derivative contract record or information received from a third party (e.g. an agreed-upon third party) to calculate the payments due on a derivative contract. For non-legal records, settlements can be submitted to the cash flow netting block 224 through the back office 222A. The settlement 226 unit can then transfer funds from a party nostro 228 account or other agreed-upon custodian bank account or accounts.

The data storage facility 110 can also perform calculation of payments made on derivative contracts with an unconfirmed current state 282. For example, trading counterparties 120 can link (e.g. via a user interactive interface) one or more unmatched warehouse data structures 250 that relate to new trades or post trade events. If the terms of linked records relate to fees, such as the initial fee field 260 match the data storage facility 110 can compute payment values between the counterparties based on the matched values regardless of whether the derivative contract is in an unconfirmed current state 282. If, for example, data structures 250 are linked to facilitate settlement but are ultimately confirmed with different payment field values, the data storage facility 110 can calculate new amounts based on the trades with a confirmed current state 282 or reverse the original amounts settled.

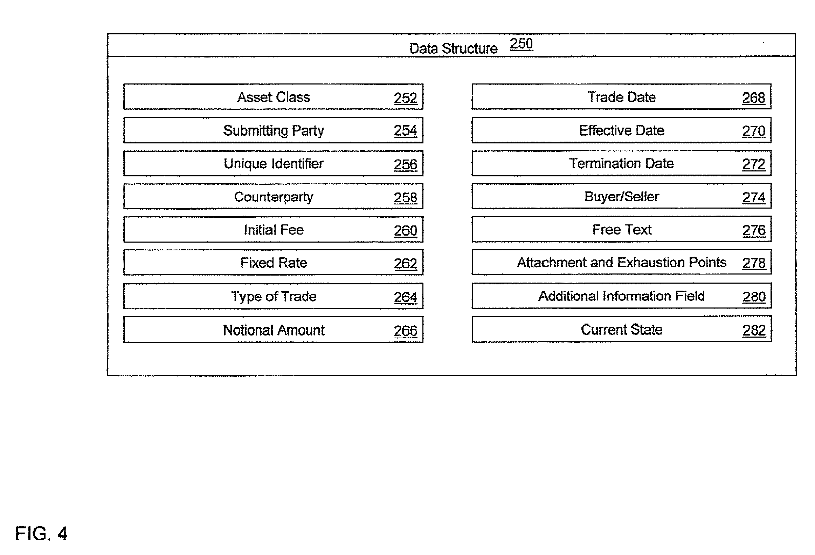

FIG. 4 is an exemplary data structure 250 used in a data storage facility for storing and processing data associated with a derivative contract and trading events. If a field is described as a matching field, the value in a field of the data structure 250 is the same as the value for a corresponding field in a corresponding data structure. Fields can be matching fields upon submission of the trade record warehouse data structure 250 to the data storage facility 110. The data structure 250 includes the asset class field 252 which can have values corresponding to credit, rates, or equities. A party submitting a trade record is recorded in the submitting party field 254, along with a unique trading identifier for the submitting party. The counterparty to the derivative contract is identified in the counterparty field 258, and the initial payment or fee due for the derivative contract is identified in the initial fee field 260. The fixed rate field 264 contains a value for the fixed rate. Some embodiments feature a floating rate index, spread, or non-fixed value that can fluctuate. The type of trade is stored in the type of trade field 264, which can be a Credit Default on Loan, collateralized debt obligation, or credit default swap. The type of trade field 264 can also include, for example, "other" for a non-legal record because the data storage facility 110 can store and process any type of derivative contract. The notional amount field 226 identifies a value for a quantity of the underlier to which the derivative contract applies.

Applicable date values for the derivative contract are stored in the trade date field 268, effective date field 270, and termination date field 272. The buyer or seller of the derivative contract 264 field identifies the trading counterparty 120 (e.g buyer or seller) roles that are assigned for the derivative contract. The free text field 276 allows free-form or non-matching text to be entered into the data structure (e.g., to provide any additional information to a trading counterparty that is not represented in the data structure.

If the risk levels of the derivative contract have been allocated between counter parties, the attachment point and detachment point or exhaustion point can be stored in the attachment and exhaustion points field 278. The additional information field 280 can be used for parties to insert relevant information and can be a matching or non-matching field depending on the data entered. If the trading counterparties 120 or the data storage facility 110 use the additional information field 280 for a particular type of information and determine the information to be useful for a derivative contract input, a new field can be created in the data structure 250 to represent the new/useful information. Thus, the additional information field 280 can be used to determine new fields to add in the data structure 250 or the data storage facility 110. The current state field 282 can be used by the data storage facility 110 to maintain the contract state throughout the lifecycle of the derivative contract for post-trade event processing.

Referencing FIG. 3, post trade events relating to new derivative contracts can result in modification of the current state 282 of the data structure 250 for the derivative contract associated with the received data. Post trade events can be confirmed in the confirmation block 206 through, for example, an electronic confirmation service for assignments, terminations, and/or amendments that notify the data storage facility 110. Post-trade events can also be updated in a database record (250) upon being received at the data storage facility 110 from an outside source (e.g. an agreed upon third party). For example, factor adjustments can be obtained from parties under contract to index sponsors to provide the adjustments.

The data storage facility 110 can, for example, maintain legal trade records where the derivative contract information stored in the data storage facility 110 constitutes a legal record (e.g. a full legal record). Automated confirmation of any confirmable post-trade event can be accomplished through the trade confirmation sources block 218, which can be available for a trade that is stored in the data storage facility 110 as a legal trade record. The data storage facility 110 can also, for example, maintain non-legal trade records. Automated legal confirmation of post-trade events through the external trade confirmation sources 218 may not be available for non-legal records, but trading counterparties 120 can tie-out the trade in the data storage facility 110 on the trade date of the derivative contract as described above with reference to Table 1.

When, for example, an unconfirmed post-trade event exists in the data storage facility 110, the current state 282 of the data structure is associated with an uncertain state. For example, when post trade events are confirmed asynchronously or erroneously confirmed, the current state 282 can also be associated with an uncertain state. Trading counterparties can be notified of the change to the current state 282 until, for example, the event data is received or time passes such that it is changed to a confirmed current state 282 or the trading counterparties 120 cancel the trade or event.

The back-loading block 210 can be used for back-loading of both legal trade records and non-legal trade records. The credit event processing 216 unit can allow the trading counterparty 120 to, for example, manage relevant notices of notifications for the derivative contract, determine whether the requisite number of notices or notifications have been provided to trigger an auction, determine net positions to aid the physical settlement and/or auction processes, identify derivative contract records in the data storage facility 110 subject to the various processes, and calculate or manage cash settlement payments due on derivative contracts.

An exemplary list of the values for the current state field 282 are depicted below in Table 2:

**TABLE 2**

| **Life Cycle Event** | **State of Event** | **Data Storage Facility Current State Status** |
|---|---|---|
| New Trade | Unconfirmed | Unconfirmed |
| New Trade | Alleged | Alleged |
| New Trade | Confirmed | Certain |
| Partial Termination | Alleged | Uncertain |
| Partial Termination | Confirmed | Uncertain |
| Increase | Alleged | Uncertain |
| Increase | Confirmed | Certain |
| Partial Termination | Alleged | Uncertain |
| Partial Termination | Confirmed | Certain |

Referring to Table 2, the "Life Cycle Event" column identifies to the type of derivative contract event (data) the trading counterparty 120 transmitted to the data storage facility 110. By way of example, this data can be assigned with a "New Trade," "Partial Termination," or "Increase." The column "State of Event" corresponds to the current state of the trade event. The "Data Storage Facility Current State Status" column corresponds to the current status of the derivative contract stored in the data storage. "Data Storage Facility Current Status" can represent the scenario when a trading counterparty 120A submitting one set of data associated with the derivative contract and the other trading counterparty 120B has not yet confirmed the trade, resulting in a status of "Unconfirmed." Prior to full legal confirmation, new trades can be recorded in the data storage facility 110 as either "Unconfirmed" or "Alleged."

When new warehouse trades are legally confirmed, they are recorded in the data storage facility 110 as having a current state that is "Certain" in the "Data Storage Facility Current State Status" column as of the effective date 270 stored in the current state field 282 of the data structure 250. For a back-loaded derivative contract, the effective date field 270 represents the back-loading effective date assigned to the derivative contract record upon back-loading to the database. When "Unconfirmed" (or "in flight) post trade events exist in the data storage facility 110 for any derivative contract stored in the data storage facility 110, the "Data Storage Facility Current State Status" can be designated "Uncertain." The status remains "Uncertain" until the trade event has either been confirmed (e.g., by a signal received from a trading counterparty) and the effective date has been reached, or trade event submissions are cancelled or rescinded. Confirmable events of the data storage facility can include new derivative contract trades, full or partial derivative contract terminations, full or partial derivative contract assignments/novations, derivate contract increases, and/or amendments to derivative contract records.

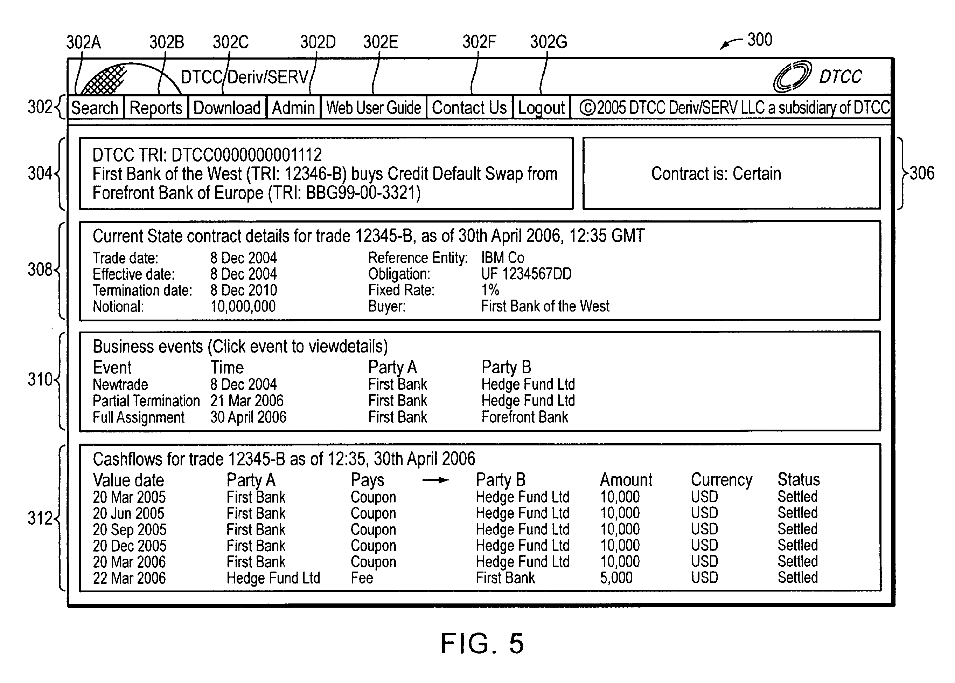

FIG. 5 is a screen shot of an exemplary display 300 for use in the system of FIG. 1. For example, the display 300 can be an interface to a matching and confirmation service for credit default swaps, such as the DTCC Deriv/SERV service. The display 300 includes a menu bar 302 with the sub-menus "search" 302A, "reports" 302B, "download" 302C, "admin" 302D, "web user guide" 302E, "contact us" 302F, and "logout" 302G. The "search" 302A sub-menu, upon being selected by a trading counterparty 120, displays a new user interface to the trading counterparty 120 allowing the trading counterparty 120 to search for derivative contracts based on specific criteria. The trading counterparty 120 can submit a query of the database based on fields in the data structure of FIG. 4. The "reports" 302B displays report information. The "download" 302C sub-menu allows the user to download and/or save in local memory data associated with a particular derivative contract. The data can be downloaded, for example, to a spreadsheet application. The "Admin" 302D sub-menu allows a trading counterparty 120 to change administrative information regarding the trading counterparty's account (e.g., telephone number, address, contact information, and billing accounts). The "web user guide" 302E sub-menu, upon being selected, displays a screen to the trading counterparty 120 containing the user guide for the display 300. The "contact us" 302F sub-menu, upon selection, displays a new screen containing applicable contact information to the trading counterparty (e.g., an address, company telephone number, support telephone number, and web email interface). The "logout" 302G allows a trading counterparty 120 to log off (e.g., securely) of the display 300.

The "party identification" portion of the UI 304 lists the unique identifier 256 of a derivative contract ("DTCC0000000001112"), the trading counterparties 120 ("First Bank of the West" and "Forefront Bank of Europe", the trading counterparty identification numbers ("12346-B" and "BBG99-00-3321", respectively), and the derivative contract that was purchased ("Credit Default Swap"). The "contract state" portion 306 displays the current state 282 of the derivative contract identified in portion by "Certain". The "current state contract details" portion 308 displays state dates of the derivative contract. For example, the portion includes trade date ("8 Dec 2004"), effective date ("8 Dec 2004"), termination date ("8 Dec 2010"), and back-load effective date (not shown). Additional contract details are displayed in the portion 308, including the notional amount ("10,000,000"), reference entity name ("IBM Co"), obligation ("UF124567D"), rate ("1%"), and buyer ("First Bank of the West"). The information in the display 300 is retrieved by the central processing unit 114 from the database 112 and assembled for display.

The "business events" portion 310 identifies post-trade events associated with the derivative contract record. The portion 310 displays information for each post-trade event listed, which are displayed in four columns "Event," "Time," "Party A," and "Party B." Business events shown, for example, with each column separated with commas, are "Newtrade, 8 Dec 2004, First Bank, Hedge Fund Ltd", "Partial Termination, 21 Mar 2006, First Bank, Hedge Fund Ltd", and "Full Assignment, 30 April 2006, First Bank, Forefront Bank." If the trading counterparty 120 selects the post-trade event (e.g. "new trade"), the user is brought to, for example, a window containing additional relevant information pertaining to the post-trade event (e.g. "new trade," which is retrieved from data storage upon the user selection). The "cash flow" portion 312 lists payment information regarding the derivative contract, including the date of payments, payment parties, amount of payment, currency type, and settlement status. One skilled in the art can appreciate that other embodiments or configurations of the display 300 can be used to represent the derivative contract information stored and retrieved from the data storage.

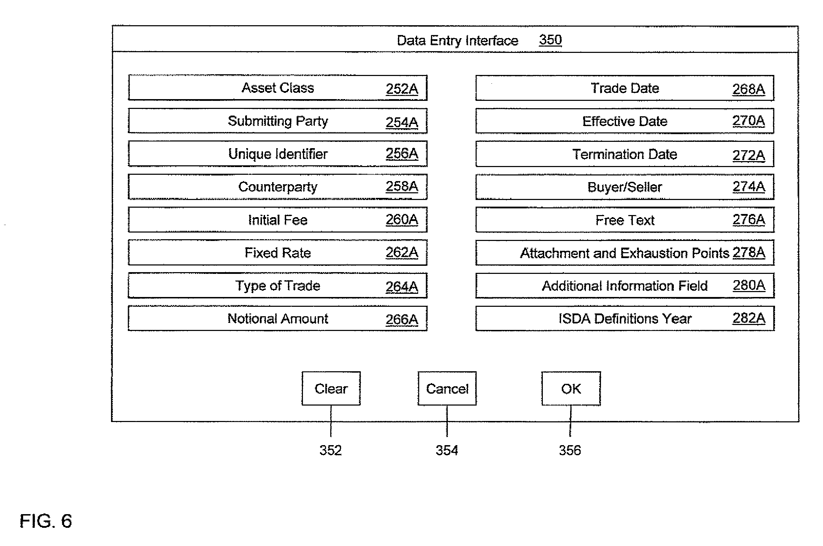

FIG. 6 is an exemplary data entry interface 350 for entry of data corresponding to the fields of the data structure 250 of FIG. 4. Data can be entered or input into the interface 350 by a trading counterparty 120, e.g. in the system 100 of FIG. 1. The trading counterparty 120 enters information for the asset class field 252 in the data structure 250 via the asset class entry field 252A. The submitting party entry field 254A of the interface 350 corresponds to the submitting party field 254 of the data structure 250. The counterparty entry field 258A of the interface 350 corresponds to data entered by the user to the counterparty field 258 of the data structure 250. The trading counterparty 120 enters data stored in the initial fee field 260 of the data structure 250 through the initial fee entry field 260A of the interface 350. The fixed rate or other rate information is submitted through the fixed rate entry field 262A of the interface 350 and stored in the fixed rate field 262 of the data structure 250. The type of trade entry field 264A of the interface 350 corresponds to the type of trade field 264 of the data structure 250.

For contract dates, the trade date entry field 258A of the interface 350 is stored in the trade date field 258 of the data structure 250, the effective date entry field 270A of the interface 350 is stored in the effective date field 270 of the data structure 250, and the termination date entry field 272A of the interface 350 maps to the termination date field 272 of the data structure 250. The trading counterparty 120 inputs buyer or seller information in the buyer/seller entry field 274A of the interface 350 which is stored in the buyer/seller field 274 of the data structure 350. Text inserted by the trade counterparty 120 in the free text entry field 276A of the interface 350 is stored in the free text field 276 of the data structure. The attachment and exhaustion point entry field 278A of the interface 350 corresponds to the attachment and exhaustion field 278 of the data structure 250. The trading counterparty 120 submits other relevant information in the additional information entry field 280A of the interface 350, which is stored in the additional information field 280 of the data structure 250.

Certain fields of the data structure 250 are unavailable for modification to change by a trading counterparty 120 via the interface 350. For example, the trading counterparty 120 can not modify information maintained by the data storage facility 110, such as the unique identifier 256, 256A assigned to the derivative contract or the current state 282, 282A of the derivative contract. In some embodiments, the unique identifier 256 can be a unique number to the data storage facility 110, but a trading counterparty 120 can locally change the unique identifier 256 at the trading counterparty's 120 facility. The "clear" button 352 erases data entered into the data entry interface 350 during a current session. The "cancel" button 354 discards any information the trading counterparty 120 provided in the data entry interface 350 and can, for example, bring the trading counterparty 120 back to the previous interface being viewed. Data entered into the data entry interface 350 can be submitted to the data storage facility 110 for storage by selecting the "ok" button 356. The data interface 350 can take the user to a confirmation page, the previous interface or another interface.

Referring back to FIG. 3, non-legal trade records can be submitted using the same template as a new trade record (e.g. a legal trade record), but certain fields, such as the initial fee field 260, trade date field 268, and effective date field 270 can be verified by the trading counterparties 120 if the funds do not match. Similarly, non-legal trade record events can be submitted to the data storage facility 110 using the same template as a legal trade record event discussed above.

FIG. 7 is a flow chart 700 depicting exemplary processing of a signal indicative of a trade event for a derivative contract. The flow chart 700 can be carried out by the components of FIGS. 1-3. In step (360), a signal for a trade event for a derivative contract is received, e.g. by the data storage facility 110. In step (362) a determination is made whether the trade event is associated with a new derivative contract. For example, the data storage facility 110 can query the database 112 to carry out step 362. If the trade event is not associated with a new derivative contract, the data storage facility 110 queries the database 112 to determine if the derivative contract the trade event is associated with was previously stored in the database (step 364). If the derivative contract is neither a new derivative contract and it was not previously stored in the data storage facility 110, a determination that the derivative contract is being back-loaded can occur. If the contract is being back-loaded, processing proceeds at step 364 of FIG. 9 (step 366).

If a trade event is associated with a new derivative contract (step 362), then a unique identifier (e.g. the unique identifier field 256 of FIG. 4) is assigned to the derivative contract (step 368). This allows the data storage facility 110, for example, to guarantee that trade events are associated with the correct underlying derivative contract, that derivative contracts are not duplicated in the data storage facility, or that applicable derivative contracts are accessible to trading counterparties 120. Step 370 associates a set of rules with the derivative contract. Step 370 can also be reached if the derivative contract was previously stored in the data storage facility 110 (step 364). The set of rules is used, generally, to ensure correct application of post-trade events to the underlying derivative contract.

To verify the fields of the data structure 250 of FIG. 4, for example, procedural rules can be implemented, i.e. the effective date 270 can be any date, the trade date 268 can not be a date in the future, a payment date can be any date from the trade date 268 forward, single and initial payment dates can be any date from the trade date 268 forward, the termination date 272 should be any date after the trade date 268, any designated master document dates should be on or prior to the effective date 270, post-trade dates should be on or after the original trade date 268, post-trade effective dates should be on or after the original trade effective date 270, and post-trade event payable dates can not occur before post-trade trade dates. A set of rules as described above can be applied to the derivative contract (step 370). For example, the CPU 114 can retrieve the set of rules from the database 112 and apply the set of rules to the fields of the data structure 250, which can be stored in the database 112. In step 372, the data storage facility determines the current state (e.g. the current state 282 of FIG. 4) of the derivative contract.

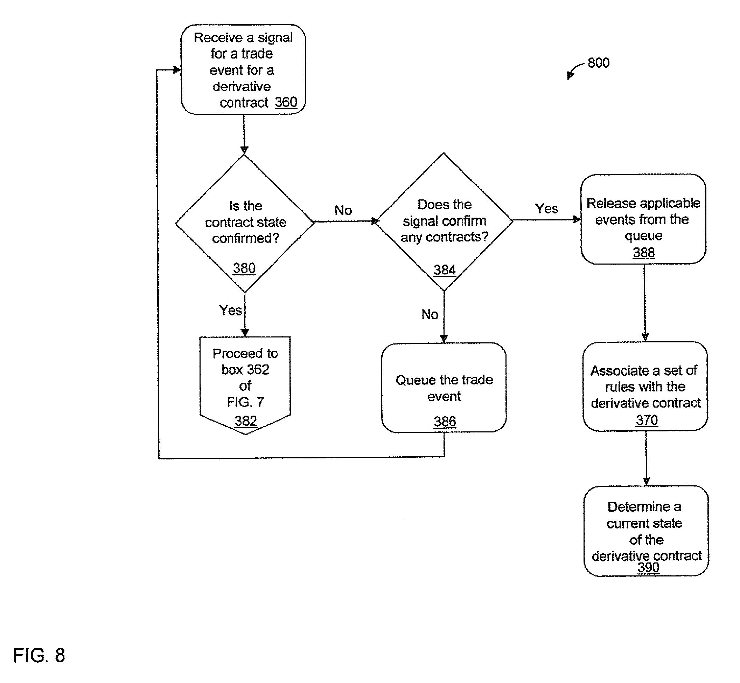

Post-trade events can arrive before the current state (i.e. the current state 282 of FIG. 4) is assigned a "confirmed" state. Additional validation rules can be used for confirmable post-trade events in this situation. FIG. 8 is a flow chart 800 depicting exemplary processing of a signal indicative of a trade event for a derivative contract with an unconfirmed current state (e.g. the current state 282 of FIG. 4). A signal for a trade event for a derivative contract is received (step 360). The signal is analyzed to determine whether the applicable contract state is "confirmed." For example, the data storage facility first receives the signal and queries the database 112 to determine if the current state 282 of FIG. 4 is "confirmed." If the current state 282 is confirmed (380), the process proceeds to step 370 of the flow chart 700 in FIG. 7, and a set of rules is associated with the derivative contract based on the trade event (step 382). If the current state in step 380 does not constitute a "confirmed" state, the process in step 384 determines whether the signal confirms any derivative contracts that have a current state other than "confirmed" (e.g. "alleged" or "unconfirmed"). If the signal does not confirm any derivative contracts in step 384, the trade event is added to a queue (step 386). The queue can be used, for example, to store post-trade events associated with derivative contracts not yet in a confirmed state. The process 800 awaits receipt of the next signal (step 360).

If the signal confirms a derivative contract (step 384), the underlying derivative contract current state is set to confirmed (e.g. the current state 284 of FIG. 4 indicates "confirmed") and any trade events in the queue that are related to the derivative contract are released from the queue (step 388). For example, the CPU 114 can move any trade events related to a derivative contract out of the queue stored in the database 112. A set of rules is with the first derivative contract to correctly associate the events released from the queue to the underlying derivative trade contract (step 370). For example, the data storage facility 110 can apply a set of rules stored in the database 112. The data storage facility 110 updates the current state (e.g. the current state 282 of FIG. 4) of the derivative contract to reflect the cumulative status of the derivative contract. For example, the cumulative status can reflect the current state based on how the trade events were applied using the set of rules from the database 112 (step 390).

Post-trade event records arriving before the current state is "certain" can be placed in the pending queue (e.g. if the underlying derivative contract is already in the data storage facility 110 but in an unconfirmed current state 282). Pending event records can be visible to the other party. Pending event records, however, can be prevented from any confirmation or data storage facility processing (e.g. prevented from being used in a matching process, reaching a confirmed current state 282, or being used to calculating payments for the pending event record). For a confirmed trade, pending events can be released from the queue and new trade event records can be accepted by the data storage facility 110 in parallel of processing the pending trade event records in step 388. The pending trade event records can be evaluated under the set of rules (step 370) in the same manner as if the pending records had just entered the data storage facility 110 to ensure seamless integration of the post-trade event and subsequent new trade events.

A post-trade event record can be rejected by the data storage facility 110 (e.g. if the record does not relate to a trade in the data storage facility 110, regardless of the current state 282 being "certain"). In some embodiments, a post-trade event record that does not relate to a trade record (e.g. stored in the data storage facility 110) can be accepted if, for example, the post-trade event record is a full assignment of the derivative contract, a partial assignment of the derivative contract, or a full termination of the derivative contract. If, for example, a post-trade event record is accepted at the data storage facility 110 but it does not relate to a trade in the data storage facility 110 and a trading counterparty 120 submits a related underlying trade record before the post-trade event is in a "confirmed" current state, the post-trade event record can be placed into the queue (step 386) until the underlying trade record achieves a "confirmed" current state.

The rule or set of rules associated with the derivative contract in step 370 can be specific to amendments. For example, an set of rules for an amendment can allow fields of the data structure 250 besides the counterparty 258 to be modified. An amendment can be accepted by the data storage facility 110 if the underlying trade record current state 282 of FIG. 4 is "confirmed." In some embodiments the set of rules can cause the data storage facility 110 to reject an amendment (e.g. if the underlying trade record current state is not confirmed, a post-trade event relating to the same underlying derivative contract is being processed by the data storage facility 110, or a distinct amendment is being processed by the data storage facility 110 regarding the same underlying derivative contract).

The set of rules associated with the derivative contract in 370 can have a specific rule or set of rules to prevent uncertainty between the derivative contract counterparties (i.e. between a remaining counterparty 120 and the transferee counterparty 120). For example, the data storage facility 110 may reject an assignment if the novated amount of the assignment exceeds the current data storage facility 110 notional amount 266 of FIG. 4. In some embodiments the data storage facility 110 may reject an assignment if the novated amount of the assignment exceeds the last certain notional amount 266 in current data storage facility 110 or if the current state 282 of the underlying contract in the data storage facility 110 is uncertain. An assignment can be rejected if the sum of remaining counter party 120 assignment input exceeds the last certain notional amount 266 of FIG. 4. For a derivative contract having a "certain" contract state (e.g. the current state 282 of FIG. 4 indicates the derivative contract is "confirmed"), the last certain notional amount (e.g. the last certain notional amount 266 of FIG. 4) of the underlying contract can be decremented by the novated amount of the current assignment (e.g. the resulting assignment contract can have a notional amount 266 equal to the novated amount and a current state 282 regardless of the previous underlying contract current state).

For example, a contract in the data storage facility 110 may have a notional amount 266 of "100". Upon the submission of a partial termination of "60" (e.g. to the data storage facility), the current state 282 of that contract can become "uncertain." Assignment submissions to the data storage facility 110 by a trading counterparty 120 with novated amounts of 60 can be accepted by the data storage facility 110 because the last certain notional amount 266 was "100". The data storage facility 110 can set the current state 282 of the partial termination to confirmed without changing, for example, the last certain notional amount 266 or the uncertain current state 282 of the contract. For example, the data storage facility 110 can set the current state 282 to confirmed and the last certain notional amount 266 can be reduced to "40." The new trade between the remaining trading counterparty 120 and the transferee trading counterparty 120 can exist in the data storage facility 110 with a notional amount 266 of "60" and a "certain" current state. The underlying trade can still have a current status 282 of "uncertain".

FIG. 9 is a flow chart 900 depicting illustrative processing of a signal indicative of a derivative contract that is not previously stored, referencing FIGS. 1 and 4. In step 360 a signal for a derivative contract is received (e.g. the data storage facility 110 receives a signal). The signal is processed to determine whether the contract was previously stored (step 364). If the derivative contract was previously stored in the data storage facility 110, the data storage facility 110 determines whether the effective date precedes the derivative contract trade date (step 400). For example, the data storage facility 110 can compare the effective date 257 to the derivative contract trade date 268 of FIG. 4. In step 402, the effective date precedes the derivative contract trade date, the trade event is rejected (e.g. by the data storage facility 110). If the effective date does not precede the derivative contract trade date, the process continues to step 370 in FIG. 7. If the derivative contract was not previously stored in the data storage facility 110, an effective date to the derivative contract (step 406). For example, the data storage facility 110 can assign an effective date 270 to the derivative contract of FIG. 4. The derivative contract is assigned a unique identifier in step 408 to distinguish it from other derivative contract records (stored in the database 112). For example, the data storage facility 110 can determine a unique identifier 256 for the derivative contract. The derivative contract is stored in a computer data storage, i.e. the database 112 (410).

An exemplary list of the template values which can be used when back-loading a contract through FIG. 9 are depicted below in Table 3:

**TABLE 3**

| **Potential Back-loading Fields** | | | |
|---|---|---|---|
| **Field** | **Matched** | **Back-load Record** | **Other Records** |
| Buyer/Seller | Yes | Used | Used/Matching |
| Termination Date | Yes | Used | Used/Matching |
| Notional Amount | Yes | Used | Used/Matching |
| Fixed Rate | Yes | Conditional | Conditional/Matching |
| Trade Date | Maybe | Used | Used/Matching |
| Effective Date | No | Used | Used/Matching |
| Initial Fee | No | Optional | Used/Matching |
| Back-load Effective Date | Yes | Used | Does Not Exist |

Referring to Table 3, the "Field" column identifies fields for a back-load data structure, similar to the data structure 250 of FIG. 4. The "Matched" column identifies the record field is matched (e.g. by the data storage facility 110) with "Yes." The "Matched" column indicates the field is not matched with "No." If some embodiments match the field and some embodiments do not match the field, the "Matched" column will indicate "Maybe." The "Back-loading Record" column indicates whether or not the value in the "Field" column is used in the "Back-load Record" template. The "Back-load Record" column value "Used" indicates the "Field" can be used in the back-load record. A value of "Optional" indicates the "Field" can either be used or not used in the back-load record. A "Back-load Record" entry of "Conditional" indicates the "Field" may be used based on the type of back-load contract submitted. The column "Other Records" indicates how other records (e.g. derivative contract entry records) both use and match the fields. The "Other Record" column values are a pair of values which correspond to the "Matched" and "Back-load Record" columns discussed above. For example, the interface 350 of FIG. 6 can be a different record than the back-load record.

For the last four rows of Table 3, the back-loading record can differ from other records. The "Buyer/Seller" field corresponds to the Buyer/Seller 274 field of the data structure 250, and can be used the same way for both back-loading records and other records, with the field being matched. The "Termination Date" field corresponds to the termination date 272 field of the data structure 250, and can be used the same way for both back-loading records and other records, with the field being matched. The "Notional Amount" corresponds to the notional amount 266 field of the data structure 250, and can be used the same way for both back-loading records and other records, with the field being matched. The "Fixed Rate" corresponds to the fixed rate 262 field of the data structure 250, and can be conditionally matched depending upon the underlying contract type.

The "Trade Date" corresponds to the trade date 268 field and can be used by the back-load record but may not be matched for a back-load contract, but is both used and a matching field for other record types (e.g. derivative contract entry templates). The "Effective Date" column corresponds to the effective date 270 field of the data structure 250 and can be used by the back-loading record while not being matched. Other records match the "Effective Date" field. The "Initial Fee" column corresponds to the initial fee 260 field of the data structure 250 and can be used optionally for a back-load data structure and not matched. For other records the initial fee 260 field can be used and matched. The "Back-load Effective Date" is a field which can only be used by the back-load record because other contracts do not have a back-load effective date.

The template used to submit the back-loaded contract to the data storage facility 110 can be, for example, the same template used to submit other derivative contracts. For example, the data entry interface 350 can be used to submit a back-loaded derivative contract. The back-load template may match fewer fields (e.g. the trade date 268, effective date 270, and initial fee 260 of FIG. 4 can be ignored instead of matched by the data storage facility 110). The back-load effective date can be submitted through the additional information field 280. Some embodiments of the data entry interface 350 can have, for example, a separate field for the back-load effective date.

For example, current state trade records submitted to the data storage facility 110 can use the same interface, such as the data entry interface 350, to submit the contract information as new contracts. For back-loaded contracts the trade date 268 and effective date 270 fields can be informational non-matching fields. Once a back-loaded contract is confirmed by the data storage facility 110, the contract can constitute legal re-documentation of the transactions effective as of the back-load effective date. The back-load effective date can be, for example, bilaterally designated between any pair of trading counterparties 120A, 120B. Some post trade events (e.g. effective on or before the back-load effective date) can be included in the current contract representation submitted to the data storage facility 110 as the back-loaded contract. Some post trade events (e.g. effective after the back-load effective date) should not be included in the current contract representation of the back-loaded trade data.

To resolve any legal terms of a derivative contract before submitting it to the data storage facility 110 for back-loading, a clean-up environment can be used between the trading counterparties 120A, 120B. Once cleanup is completed using the clean-up environment, for example, the derivative contract can be loaded into the data storage system 110. For example, the derivative contract can be loaded automatically or through trading counterparty 120 submission. For a back-loaded derivative contract in the data storage facility 110, post-trade events received by the data storage facility 110 can be applied using the same process in FIG. 7.

FIG. 10A is a block diagram of an exemplary credit event processing system 420. A trading counterparty 120A (e.g. a trading counterparty 120 to a derivative contract or an agent acting on behalf of the trading counterparty 120 to facilitate payments in the data storage facility 110) is in communication with the query processor 422 of the data storage facility 110. The data storage facility 110 includes a database 112, a query processor 422, a notification processor 424, and an event processor 426. The query processor 422 receives queries from the trading counterparty 120A and transmits them to the database which stores derivative contract records. The database 112 transmits a set 428 of data (e.g. derivative contract records, derivative contract purchases, or derivative contract sales) to the query processor 422 based on the query from the trading counterparty 120A. The query processor 422 transmits the set 424 to the trading counterparty 120A. The trading counterparty 120A receives the set 424 and selects a subset 430 of data from the set 428 of data. The trading counterparty 120A can, for example, select a subset 430 of derivative contract records from the set 428 of derivative contract records with the same termination date 272 (See FIG. 4).

The trading counterparty 120A transmits the subset 430 of data to the notification processor 424. The notification processor 424 is in communication with the database 112. The notification processor 424 can, for example, receive information from the database 112 containing the email addresses of one or more trading counterparties 120B, 120C for each derivative contract. The notification processor 424 transmits a notification to one or more trading counterparties 120B, 120C over a communications network 130. In response to the notification 432, the trading counterparty 120B, 120C transmits a response 434 to the event processor 426 over the communication network 130. The event processor 426 processes the response 434 and communicates with the notification processor 424. In some embodiments, the responsive notifications from the trading counterparty 120B, 120C are transmitted in the same format as the notification from the trading counterparty 120A. For example, the notifications can include data entered into a particular form, such as an email, a document, or a proprietary user interface format including data entry fields populated by any of the trading counterparties.

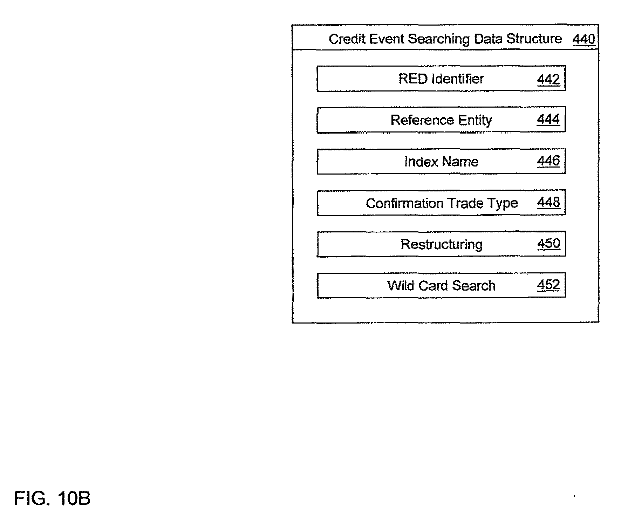

FIG. 10B is an exemplary data structure for processing queries of derivative contracts in a database 112. The credit event searching data structure 440 includes a Reference Entity Database (RED) Identifier field 442. The trading counterparty 120A can, for example, search based on the RED identifier field 442 to identify the reference entity and the reference obligation. The credit event searching data structure 440 includes a reference entity field 444. The field 444 can allow a trading counterparty 120A to query the database 112 for derivative contracts based on the reference entity 444 field. The index name field 446 allows a trading counterparty 120A to search for derivative contract records using a particular index name. The credit event searching data structure 440 includes a confirmation trade type field 448, which is a credit related field. The restructuring field 450 of the credit event searching data structure 440 allows, for example, a trading counterparty 120A to search for derivative contracts based on restructuring criteria. The credit event searching data structure 440 includes a wild card search 452. This can, for example, allow a trading counterparty to search for a set of derivative contracts with the wild card in any field of the derivative contracts contained h the database 112.

The trading counterparty 120A can query the database 112 (see FIG. 10A) of the data storage facility 110 for derivative contract records based on certain criteria (e.g. that may have been affected by a credit event, have a particular RED Identifier 442, have a specific index name 446, or use a particular confirmation trade type 448). The query transmitted to the query processor 422 can search for derivative contract records regardless of, for example, the current state 282 of the data structure 250. For example, the query processor 422 can query the database 112 by searching for the unique identifier 256, a wild card search by trading counterparty 258, and other data structure 250 fields of FIG. 4. The database 112 can return, for example, zero or more derivative contract records matching the query of the trading counterparty 120A. The trading counterparty 120A can download, for example, the set 428 of derivative contracts through a spreadsheet, Ethernet connection, and/or the like.

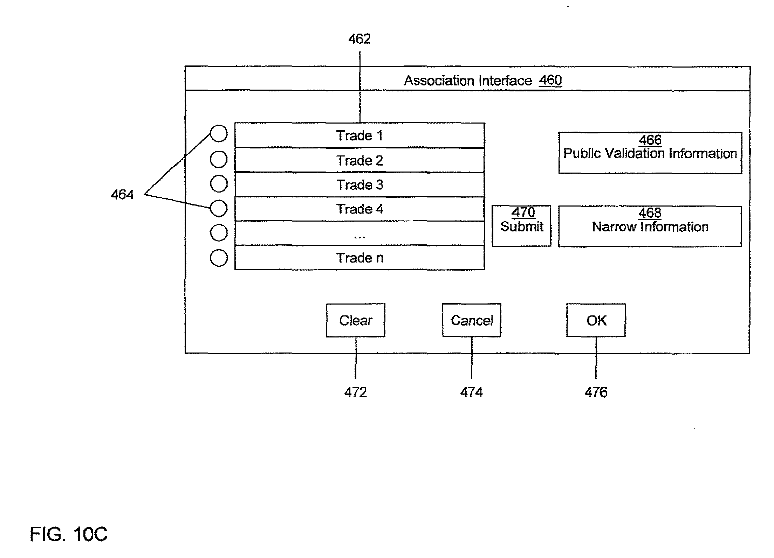

The trading counterparty 120A can manually identify specific derivative contracts from the set 428 with a flag to create a subset 430 from the set 428. FIG. 10C is an exemplary user interface allowing a user to specify a set of derivative contracts for notification processing. The association interface 460 includes a list of derivative contract trades field 462 containing derivative contract trade 1 through derivative contract trade n. The list of derivative contract trades field 462 can, for example, contain no derivative contract trades. Each derivative contract trade within the list of derivative contract trades 462 is associated with a flag 464. A trading counterparty 120A can trigger a derivative contract trade within the list of derivative contract trades 462 by selecting the corresponding flag 464. A trading counterparty 120A can submit sources of publicly available information through the publicly available information field 466. A trading counterparty 120A can enter additional information in the narrow information field 468. Selecting the "submit" 470 button can filter the list of derivative contracts 462 based on the information submitted in the narrow information field 468, and an abbreviated list containing only derivative contract events matching the narrow information 468 field can be displayed.

When the trading counterparty 120A presses the "clear" 472 button, the fields of the association interface 460 can be reset (e.g. all selected flags 464 can be cleared, information entered into the public validation information field 466 can be deleted, information entered into the narrow field 468 can be cleared, and the list of derivative contract trades 462 can be updated to display all contracts originally returned to the trading counterparty 120A if the list was previously narrowed using the narrow field 468). The "cancel" 474 button can close the association interface 460 window without transmitting information (e.g. to the data storage facility 110). The user can, for example, be taken to the previous window used to access the association interface 460. The "OK" 476 button generates the subset 430 of data based on the set of data 428 and information entered into the association interface 460 fields for transmission (i.e. the subset 430 of data, which is transmitted to the notification processor 424).

The trading counterparty 120A can flag derivative contracts from the set 428 based on desired criteria. For example, derivative contracts can be flagged on a counterparty-by-counterparty basis, universal basis, or universal-except-for-certain-counterparties selection. A trading counterparty 120A can manually trigger credit event notices for the subset 430. In some embodiments, the notification processor 424 can receive the subset 430 and automatically send a notification 432 through the data storage facility 110 to relevant trading counterparties 120B, 120C. A notification 432 can automatically designate the flagged data storage facility 110 contracts of the subset 430. A notification 432 can external information (e.g. references to a source of publicly available information 466 submitted by a trading counterparty 120A through the association interface 460). A notification 432 can contain a designation of the credit event type, such as bankruptcy, failure to pay, restructuring, or other credit event types. A trading counterparty 120A can, for example, re-submit the subset 430 of data to the notification processor 424 to resend a notification 432. The notification processor 424 can assign an event determination date to the notification 432. For example, an event determination date can require a trading counterparty 120B, 120C to respond to the event processor 426 by a particular date.

A trading counterparty 120A can request a daily reporting of all derivative contracts stored in the data storage facility 110 related to a party (e.g. triggered by the trading counterparty 120A or triggered against the trading counterparty 120A). For example, the data storage facility 110 can determine the global population of derivative contract records that are in the database 112 and are part of a potential credit event. In some embodiments, the data storage facility 110 can determine the percentage of derivative contract trades where the notification 432 has been given to the trading counterparties 120B, 120C. The data storage facility can determine the number of independent firms that have responded 434 regarding a notification 432.

FIG. 11 is a block diagram 1100 illustrating exemplary data flow for payment processing. The data storage facility 110 includes an event processor 426. The event processor 426 communicates with a communication network 130 and a payment calculator 456. The payment calculator 456 communicates with the database 112 and the notification processor 424. The notification processor 424 communicates with the communication network 130. The notification processor transmits notifications 444 to a trading counterparty 120 through the communication network 130.

The payment calculator 456 can calculate payments for derivative contracts stored in the database 112. For example, the payment calculator can automatically calculate a payment upon receipt of an event from the event processor 426 which causes a derivative contract payment to come due. The payment calculator 456 checks the current state field 282 (see FIG. 4) of the data structure 250 to verify the current state field 282 represents a "confirmed" state. The payment calculator 456 can calculate one or more payments due on the derivative contract, and provides information to the notification processor 424 (e.g. the payment due, the underlying derivative contract, and the trading counterparty). The notification processor 424 can send a notification 458 to the trading counterparty 120. The notification 458 can contain the information provided by the payment calculator 456.

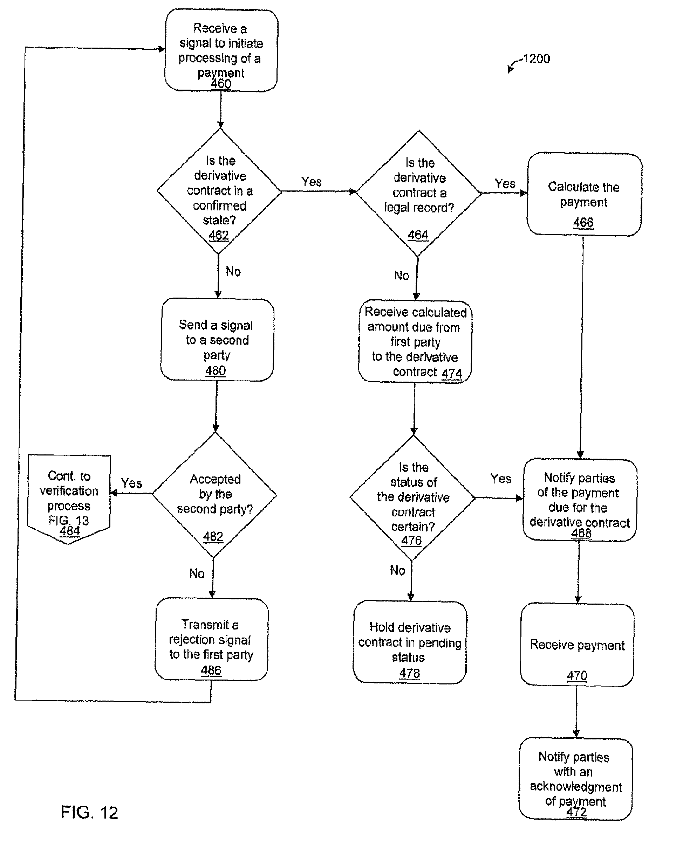

The payment calculator 456 may not automatically calculate payments (e.g. if the derivative contract is a non-legal contract record or is in an unconfirmed current state 282 (see FIG. 4)). FIG. 12 is a flow chart 1200 depicting a payment process for a derivative contract, where the flow chart 1200 can be carried out using the components of FIG. 11. A signal is received (e.g. by the data storage facility 110) to initiate processing of a payment (step 460). The signal, for example, is transmitted by a trading counterparty 120. The derivative contract current state is queried to determine if it is confirmed (step 462). For example, the data storage facility 110 determines if the contract state field 282 of FIG. 4 is "confirmed." If the derivative is in a confirmed state, derivative contract is processed (by the data storage facility 110) based on whether it comprises a full legal record (step 464). If the derivative contract is a full legal record, a payment due can be calculated (e.g. automatically by the payment calculator 456) on the derivative contract (step 466). For example, the payment calculator 456 can provide the payment information and derivative contract information to the notification processor 424. The trading counterparties 120 to the derivative contract are notified (e.g. through the notification processor 424) of the payment due (step 468). The payment is received in step 470. For example, the trading counterparty 120 can transmit a payment to the event processor 110 over the communication network 130, and the payment can be transmitted from the event processor 426 to the payment calculator 456. The payment calculator 456 can confirm the payment and can notify the notification processor 424. The trading counterparties 120 are notified once the payment is completed in step 472. For example, the notification processor can transmit a notification 458 to the trading counterparties 120.

If the derivative contract is not a legal record (step 464), the payment is not automatically calculated (e.g. by the payment calculator 456). A calculated amount due is transmitted from the first party to the derivative contract, e.g. a trading counterparty 120, (step 474). For example, the calculated amount is transmitted to the event processor 426, which relays the calculated amount to the payment calculator 456. As previously described, the current state of the contract is checked (476). If the status of the derivative contract is certain, the parties are notified of the payment due for the derivative contract (step 468) as discussed above. For example, the payment calculator 456 transmits to the notification processor 424 which notifies the trading counterparties 120. If the current state of the derivative contract is not certain, the derivative contract is held in a pending status (step 478). For example, the payment calculator transmits a message to the database 112 to hold the derivative contract. The derivative contract can be released from the pending status, for example, by receiving a signal indicative of setting the current state 282 of the derivative contract to a certain state.

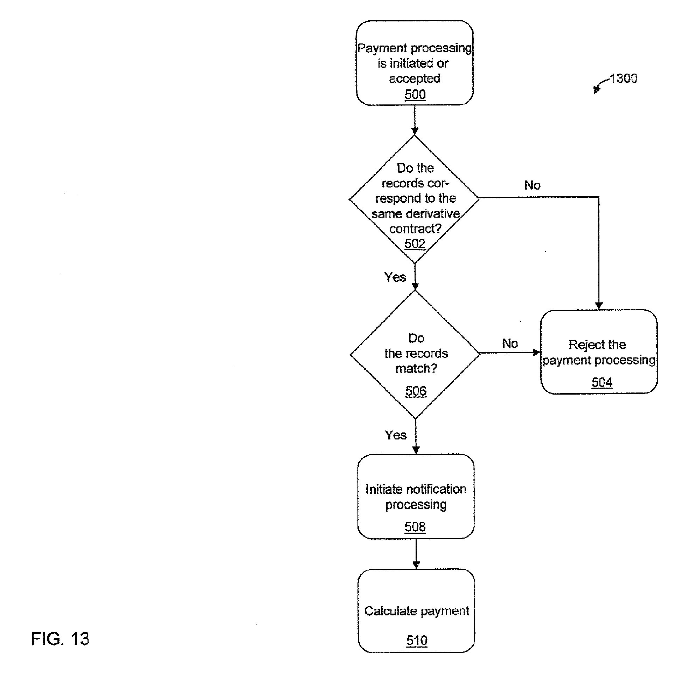

If the derivative contract is not in a confirmed current state 282, a signal is transmitted (by the notification processor 424) to the other trading counterparty 120 of the derivative contract (step 480) indicative of initiating payment on the unconfirmed derivative contract. If the trading counterparty 120 transmits, for example, an accept response to the event processor 426 (step 482), the process proceeds to the verification process of FIG. 13 (step 484). In response to a rejection by the second party, a rejection signal is transmitted to the first party. For example, if the trading counterparty 120 sends an accept response to the event processor 426, the notification processor 424 sends a rejection signal to the trading counterparty 120 that initiated the payment (486).

An exemplary list of trade types and how payments are calculated by the payment calculator 456 of FIG. 11 are depicted below in Table 4:

**TABLE 4**

| **Trade Type** | **Legal Record** | **Tie-out Record** | **Payment Generation** |
|---|---|---|---|
| CDS | YES | NO | Automated |
| CD Index | YES | NO | Automated (Using 3^{rd} party information after credit event) |
| Tranche | YES | NO | Automated (Using 3^{rd} party information after a credit event) |
| CD Index Pay as you go | YES | NO | Automated (Using 3^{rd} party information) |
| Others | NO | YES | External generation, matched with the data storage facility (except where fees indicated in contact record). |

Referring to Tables 1 and 4 and FIGS. 11-12, the first three columns "Trade Type," "Legal Record," and "Tie-out Record" contain the same values as in Table 1. The fourth column "Payment Generation" indicates how the payment calculator 456 handles payments for the particular trade type. The payment calculator 456 calculates payments. For example, the payment calculator 456 can automatically calculate payments for legal records with a current state 282 of certain (See FIG. 4), but not for non-legal records. Payments for a "CDS" can be automatically calculated by the payment calculator 456. Payments for a "CD Index" can be automatically calculated by the payment calculator 456 while relying on agreed third party information (e.g. CDS an iTraxx). "Tranche" trade types can be calculated automatically by the payment calculator 456 after, for example, the occurrence of a credit event affecting one of the names on the Index. The data storage facility 110 can use agreed upon third party information after the occurrence of the credit event to calculate the payment. Payments for a "CD Index Pay as you go" can be automatically calculated. For example, the payment calculator 456, for products such as ABX and CMBX where the amount due depends on factors affecting the notional amount supplied by an agreed third party, the data storage facility 110 acquires third party information after the occurrence of the credit event. For "Other" trade types, the data storage facility 110 may not automatically calculate the payment (e.g. with the payment calculator 456), but can receive external generation of the cash flows and matches them with the data storage facility 110.

The payment calculator 456 calculates payments for legal records (e.g. periodic payments, coupons, fees, and one-time up front payments). For example, the data storage facility 110 can automatically calculate payments for derivative contracts with a current state 282 of certain (See FIG. 4). The data storage facility 110 can allow a trading counterparty 120 to initiate payment processing for a derivative contract with a current state 282 of uncertain, for example. In some embodiments, for a tie-out record the cash flow can be calculated externally from the data storage facility 110 and submitted by a first trade counterparty 120. For example, a second trade counterparty can submit a payment to the data storage facility 110 in response to the calculated payment, and the payment calculator 456 can match the cash flows.

To manage payment timing, the data storage facility 110 can establish a trading counterparty 120 notification cut-off time for each currency on any day. For example, the notification cut-off time determines amounts to be paid on that day and notifies to the trading counterparties 120. The notification cut-off time can be used, for example, with banks and dealers. An earlier cut-off time can be used for true end users which are not, for example, banks and dealers since it will take longer to arrange funding. Before notifying a trading counterparty 120 of payments, the data storage facility can, for example, allow for extra time to ensure all payments for a particular trading counterparty 120 are netted together in order to present them with a single, up-to-date representation of their debt. The netted payments can, for example, net payments due from the past 180 days. The data storage facility 110 can, for example, generate night-before reports to report payment amounts to a trading counterparty 120. The data storage facility 110 can, for example, generate projection reports for cash flow extending out a specified number of days. For short time span update the data storage facility 110 can provide, for example, intra-day updates.

The data storage facility 110 can, for example, bilaterally net gross amounts payable between two trading counterparties 120 having the same user notification cut-off time. The gross amounts payable can be in a particular currency, on a particular day, and/or the like. Two trading counterparties 120 may not have the same user notification cut-off time, for example, when the derivative contracts are between a dealer and the dealer's customer. Bilateral net amounts can be calculated as of the earlier user notification cut-off time. If, for example, an amount is subsequently determined before the later primary cut-off time to be payable by the dealer, the amount can be added to the net amount payable by the dealer on the relevant payment date.

A payment can be calculated and determined to be due in the past if the current state 282 (See FIG. 4) is not set certain until it is too late for the data storage system 110 to make a proper payment calculation. A payment with a past due date can, for example, be payable as soon as the data storage facility 110 can calculate the payment and make the payment due on the next succeeding user notification cut-off time for payments in the relevant currency. A payment made late because the data storage facility 110 could not adequately calculate the payment in adequate time can be agreed upon by the trading counterparties 120 to not constitute a default. A payment may be adjusted by the data storage facility 110 if, for example, the data storage facility 110 receives a post effective derivative contract amendment. When the current state 282 of a derivative contract becomes certain from a post effective amendment, the data storage facility 110 will determine a new payment amount. For example, the data storage facility 110 can reverse a payment based on the prior derivative contract current state that was modified by the post effective amendment. The reversal amount can be netted with the new payment amount to create, for example, a simple net adjustment through the data storage facility 110 bilateral netting process.

The data storage facility 110 can support user deal linking for derivative contracts that have not been fully confirmed or have a current state 282 of uncertain (e.g. cause by an unconfirmed post trade event or an illogically confirmed post trade event). Deal linking can be used with legal contract records, and the trading counterparty 110 can propose a link, and the other trading counterparty 110 can accept or reject the proposal. For example, deal linking can be used to link contracts in a current state 282 of uncertain but not modify the current state 282 upon completion of the deal linking. The trading counterparty 110 can use a linking work flow tool to search and query unconfirmed transactions with payments due close to the time of the trade. A trading counterparty can sort the queried transactions by different criteria (e.g. fee, payment size, counterparty, trade type, or length of time unconfirmed).

Linking can be allowed by the data storage facility 110 when, for example, the transaction to be linked is in an "unconfirmed" current state 282 or the counterparty transaction to be linked to is in an "alleged" current state 282. Referencing FIG. 12, when a trading counterparty 110 initiates the linking process by sending a signal to initiate processing of a payment (460), if the derivative contract is does not have a confirmed current state 282, the data storage facility 110 sends a message to the named trading counterparty 110 to propose the link (480). The data storage facility 110 can also send a status message to the initiating counterparty 110. If the trading counterparty 110 accepts the proposed linking transaction (482), the data storage facility will verify the transaction can be linked (484), and the process proceeds to box 500 of FIG. 13. A trading record may not be linked, for example, if it is in a pending queue (See FIG. 8).

FIG. 13 is a flow chart 1300 depicting a verification process initiated by the payment of processing of FIG. 12. The records are verified (by the data storage facility 110) to ensure they correspond to the same derivative contract template, e.g. a CDS Single Name (step 502). If the records do not correspond to the same derivative contract template, the proposed link is rejected (e.g. by the data storage facility 110) (step 504). For example, the data storage facility 110 can send a notification to the trading counterparties 120 indicative of a failed linking procedure. If the records correspond to the same derivative contract template, the data storage facility 110 can verify the trade records are for the same life-cycle event (e.g. a new trade event or partial termination post trade event) (step 506). Process steps (502) and (506) can be performed in any order or in any combination. If the proposed linked records do not correspond to the same life cycle event, the payment processing is rejected (step 504). If the proposed linked records correspond to the same life cycle event, processing of the linked trade records is initiated (e.g. by the data storage facility 110) (step 508). The data storage facility 110 can assign a unique trade identifier to the linked trading records.

If the trading counterparty 120 rejects the link proposal, the proposed link goes into a rejected status, and a rejection signal is transmitted to the initiating trading counterparty 120 (step 486) (See FIG. 12). For example, a trading party 110 can cancel the linked transaction after the data storage facility 110 has initiated processing in response to the data storage facility 110, which can cause an unlinked status message to be sent to the cancelling trading counterparty 120 and a rejection message being sent to the remaining counter parties 120. The data storage facility 110 can prevent a currently linked trade record from being linked in another linking process. The data storage facility 110 can allow the trade record to be used in a new linking procedure (e.g. upon a rejection of the proposed link by the named counter party 120 or a withdrawal of the link by the initiating trading counterparty 120).

Notification processing is initiated, e.g. by the data storage facility 110 (step 508), and a confirmed status message can be sent to the trading counterparties 120. Payments due on the linked trade records are calculated (step 510). The trade record may contain parameters which determine periodic payments, or coupons, such as, for example, notional, rate, payment dates, applicable factors, or business day conventions. For example, the data storage facility 110 can use the coupon data for the linked trade records to calculate the coupons as if they were in a current state 282 of confirmed. The trade event can contain a fee or one-time up-front payment, such as Single Payment Amounts for CDS, Initial Payment Amounts for CD Indices, and/or one-time premiums. Fee data can be used by the data storage facility 110 to designate fees due regardless of post-trade events.

An exemplary list of trade record statuses and how coupons and fees are calculated is depicted below in Table 5:

**TABLE 5**

| **Trade Record Status** | **Linked** | **Coupons** | **Fees** |
|---|---|---|---|
| Unconfirmed or Alleged | No | Irrelevant | |
| Unconfirmed or Alleged | Yes | Yes | Yes |
| Confirmed | Irrelevant | Automatically Calculated | |

Referring to Table 5, the first column "Trade Record Status" indicates the current status of the trade records which is "unconfirmed" if all parties haven not confirmed the trade record. If one party has initiated the trade, the status is "alleged." If all parties have confirmed the trade record, the value is "confirmed". The "Linked" column indicates a trade record is linked with "Yes" and un-linked with "No" if trade record linking is not effectual, the value is "Irrelevant." For both the "Coupons" and "Fees" columns, if the corresponding column is calculated, it is indicated with "Yes." If it does not matter whether coupon values are calculated, the value is "Irrelevant." "Automatically Calculated" denotes the amount is automatically calculated.

The first row indicates that for an "unconfirmed or alleged" contract which is not linked, neither coupons nor fees are processed by the data storage facility 110. For an "unconfirmed or alleged" trade record which is "linked", if the trade records are matched by the data storage facility 110, trade payment calculations occur, and coupons are updated accordingly. For fees, if the contract records are matched, fees are sent to the data storage facility 110 for netting. If the trade record is confirmed, the state indicates all of the fields of a new trade record are the same, so a confirmed contract exists in the data storage facility with a current status 282 of "certain" which automatically triggers payment processing. As a result, it is irrelevant whether a confirmed trade record is linked because a payment will be calculated automatically regardless.

An exemplary list of trade record statuses and how coupons and fees are calculated is depicted below in Table 6:

**TABLE 6**

| **Trade Record Status** | **Linked** | **Underlying Contract Status** | **Coupons** | **Fees** |
|---|---|---|---|---|
| Unconfirmed/Alleged | No | Uncertain | Irrelevant | |
| Unconfirmed/Alleged | Yes | Uncertain | Yes | Yes |
| Confirmed | Irrelevant | Certain | Automatically Calculated | |

Referring to Tables 5 and 6, "Trade Record Status," "Linked," "Coupons," and "Fees" indicate the same information as in Table 5. The "Underlying Contract Status" column indicates the current status of the derivative contract in the data storage facility 110 to which the trade record applies. An "underlying contract status" is indicated as unconfirmed with "Unconfirmed." An "underlying contract status" which is confirmed is denoted with "confirmed." For an unconfirmed or alleged trade record which is not linked, payments are not processed with the underlying warehouse contract in an uncertain state. For an unconfirmed or alleged trade record which is linked, even if the underlying contract is in an uncertain status, the trade records are matched, payment calculations occur based on the underlying contract record, as modified by the matched coupon related data, and coupons are updated accordingly. Fees, if the trade records are matched, are sent to the data storage facility 110 for matching. If the trade record is confirmed, as with Table 5, it is irrelevant if the trade record is linked, and because the underlying contract has returned to a status of certain, the data storage facility 110 will automatically calculate payments.

An assignment, for example, can complicate the linking process because there are three trading counterparties 120. For a full assignment all three trading counterparties 120 to an assignment can enter their records but they may not yet be matched by the data storage facility 110. All three trading counterparties 120 can propose and accept a link between their records. A fee between two trading counterparties 120, such as the transferee and the transferor, may not be visible to the remaining trading counterparty 120. Once all three legs of the link are established (e.g. between the transferor/remaining party, transferee/remaining party, and transferor/transferee), the payments are distributed appropriately. For example, coupons between the transferor/remaining party can be removed from data storage facility 110 payment processing, coupons between the transferee/remaining party can be calculated for warehouse payment processing if all coupon data matches in the transferee and remaining party trade records, and any fee between the transferee and transferor can be sent to the data storage facility 110 for netting.

The data storage facility 110 can support a settlement infrastructure to instruct and manage settlement through an established multi-currency settlement provider. For example, for a specific currency, each bilateral pairing can be funded in the data storage facility 110 account at a settlement bank. The data storage facility 110 can have Power of Attorney over user nostro accounts to pull funds and each firm can establish a line of credit with their own nostro provider. If, for example, a trading counterparty 120 can not provide the data storage facility 110 with Power of Attorney, the trading counterparty's 120 nostro provider can be notified of the amount to be funded and the data storage facility settlement bank can expect a transfer. Once all trading counterparties 120 fund pay-in amounts, for example, the warehouse can instruct the payouts due to be sent to the corresponding trading counterparties 120. For example, a firm that fails to meet its pay-in obligations is suspended from the process and can not receive any payout amounts.

Communication between a trading counterparty 120 and the data storage facility 110 can be supported through various implementations. A computer-to-computer interface can be used. The message transport layer can be IBM MQ, SwiftNet, or other transport layer protocols. Messages can be consumed as a web service, for example, since the messages can use the XML Simple Object Access Protocol (SOAP) protocol. FpML can be used to describe derivative trade details. XML Schemas and sample XML documents can be used to define the message format. For example, input to the data storage facility 110 can follow the process: customer can put a message on an MQ queue, the data storage facility 110 can pull a message off the MQ queue, format rules can be checked with errors placed on the customer's MQ queue, accepted transactions can be processed, the originating customer can receive a response on the customer's MQ queue giving the status of the processing, and the named counterparty or counterparties can receive a status message on the MQ queue notifying them of the change in status. A spreadsheet interface can be used (e.g. following the FpML format). For example, information available for a computer-to-computer interface can be uploaded through a spreadsheet. This can be facilitated through a graphical user interface which strongly authenticates the person and firm submitting the information.

The above-described techniques can be implemented in digital electronic circuitry, or in computer hardware, firmware, software, or in combinations of them. The implementation can be as a computer program product, e.g., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps can be performed by one or more programmable processors executing a computer program to perform functions of the application by operating on input data and generating output. Method steps can also be performed by, and apparatus can be implemented as, special purpose logic circuitry, e.g., an FPGA (field programmable gate array) or an ASIC (application-specific integrated circuit). Modules can refer to portions of the computer program and/or the processor/special circuitry that implements that functionality.

Processors suitable for the execution of a computer program include, by way of example, both general and special purpose microprocessors, and any one or more processors of any kind of digital computer. Generally, a processor receives instructions and data from a read-only memory or a random access memory or both. The main elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Data transmission and instructions can also occur over a communications network. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The terms "module" and "function," as used herein, mean, but are not limited to, a software or hardware component which performs certain tasks. A module may be configured to reside on addressable storage medium and configured to execute on one or more processors. A module may be fully or partially implemented with a general purpose integrated circuit ("IC"), FPGA, or ASIC. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. Additionally, the components and modules may be implemented on many different platforms, including computers, computer servers, data communications infrastructure equipment such as application-enabled switches or routers, or telecommunications infrastructure equipment, such as public or private telephone switches or private branch exchanges ("PBX"). In any of these cases, implementation may be achieved either by writing applications that are native to the chosen platform, or by interfacing the platform to one or more external application engines.

To provide for interaction with a user, the above described techniques can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The above described techniques can be implemented in a distributed computing system that includes a back-end component, e.g., as a data server, and/or a middleware component, e.g., an application server, and/or a front-end component, e.g., a client computer having a graphical user interface and/or a Web browser through which a user can interact with an example implementation, or any combination of such back-end, middleware, or front-end components. The components of the system can be interconnected by any form or medium of digital data communications, e.g., a communications network. Examples of communications networks, also referred to as communications channels, include a local area network ("LAN") and a wide area network ("WAN"), e.g., the Internet, and include both wired and wireless networks. Unless clearly indicated otherwise, communications networks can also include all or a portion of the PSTN, for example, a portion owned by a specific carrier.

The computing system can include clients and servers. A client and server are generally remote from each other and typically interact through a communications network. The relationship of client and server arises by virtue of computer programs running on the respective computers and having a client-server relationship to each other.

The application has been described in terms of particular embodiments. The alternatives described herein are examples for illustration only and not to limit the alternatives in any way. The steps of the application can be performed in a different order and still achieve desirable results. Other embodiments are within the scope of the following claims.

## Claims

1. A computer system comprising:
a first data processor module to receive a first signal from a first party to a derivative contract, the first signal indicative of a request to initiate processing of a payment owed on the derivative contract, the derivative contract being in an unconfirmed state;
a second data processor module to transmit a second signal to a second party to the derivative contract, the second signal indicative of a request for acceptance of processing of payment;
a third data processor module to receive a third signal indicative of an acceptance from the second party;
a fourth data processor module to verify a first derivative contract record and a second derivative contract record are associated with the derivative contract or the first derivative contract record and second derivative contract record are associated with a common derivative contract event;
a fifth data processor module to transmit a fourth signal to the first party and second party of the derivative contract indicative of initiating payment;
a sixth data processor module to calculate a payment owed between the first party and second party based on the derivative contract; and
a first computer data storage module to store information associated with the derivative contract.

2. The system of claim 1, further comprising a seventh data processor module to assign a unique identifier to the first and second derivative contract records.

3. The system of claim 2, further comprising a second computer data storage to store the unique identifier.

4. The system of claim 1, further comprising a seventh data processor module to, in response to the third signal being indicative of a rejection of processing by the second party, transmit a fifth signal to the initiating party indicative of the rejection.

5. The system of claim 1, further comprising a seventh data processor module to calculate the payment based on an obligation in the first or second derivative contract record, the first or second contract record being a legally reliable record in a confirmed state.

6. The system of claim 1, further comprising a seventh data processor module to receive a fifth signal from a first party or an additional party indicative of a cash flow for a non-legal derivative contract record.

7. The system of claim 6, further comprising an eighth data processor module to verify the cash flow is associated with an existing non-legal derivative contract record in the first computer data storage.

8. The system of claim 7, further comprising a ninth data processor module to match the cash flow.

9. The system of claim 1, further comprising a seventh data processor module to calculate a payment by associating a first field specified in a derivative trade record, netting two or more amounts payable by the second party to the first party on the derivative contract, the two or more amounts payable having the same payment date, or any combination thereof.

10. The system of claim 1, wherein the derivative contract is accessible to a custodian or administrator of the first or second party for making the payment.

11. The system of claim 1, wherein a computer data processor comprises the first data processor module, the second data processor module, the third data processor module, the fourth data processor module, the fifth data processor module, and the sixth data processor module.

12. A method comprising:
receiving a first signal from a first party of a derivative contract, the first signal indicative of a request to initiate processing of payment owed on the derivative contract, the derivative contract being in an unconfirmed state;
transmitting a second signal to a second party of the derivative contract, the second signal indicative of a request for acceptance of processing of payment;
in response to receiving a third signal indicative of an acceptance from the second party, verifying that a first derivative contract record and a second derivative contract record are associated with the derivative contract or the first derivative contract record and second derivative contract record correspond to a common derivative contract event;
transmitting a fourth signal to the first party and second party of the derivative contract indicative of initiating payment processing; and
calculating a payment owed between the first party and second party based on the derivative contract.

13. The method of claim 12, wherein the derivative contract is an over-the-counter derivative contract.

14. The method of claim 13, wherein the over-the-counter derivative contract is a credit derivative contract.

15. The method of claim 12, wherein the derivative contract event comprises a new trade, a partial termination of the derivative contract, a full termination of the derivative contract, a partial assignment of the derivative contract, a full assignment of the derivative contract, a partial novation of the derivative contract, a full novation of the derivative contract, an increase of the derivative contract, an amendment to the terms of the derivative contract, an exit of the derivative contract, or any combination thereof.

16. The method of claim 12, further comprising assigning a unique identifier to the first derivative contract record and second derivative contract record.

17. The method of claim 12, further comprising, in response to the third signal being indicative of a rejection of processing by the second party, transmitting a fifth signal to the first party indicative of the rejection.

18. The method of claim 12, wherein the first derivative contract record and second derivative contract record are in an unconfirmed state due to an unconfirmed trade event, a confirmed trade event received out-of-order, or any combination thereof.

19. The method of claim 12, wherein the payment is calculated based on an obligation in a derivative contract record, the contract record being a legally reliable record in a confirmed state.

20. The method of claim 12, further comprising:
receiving a fifth signal from a first party or any other party indicative of a cash flow for a non-legal derivative contract record;
verifying the cash flow is associated with an existing non-legal derivative contract record in a computer data storage; and
matching the cash flow.

21. The method of claim 20, wherein the non-legal derivative contract record is associated with a derivative contract record not constituting a legally reliable record.

22. The method of claim 12, wherein the payment is settleable by a coupon, a fee, a one-time premium, an up-front payment, or any combination thereof.

23. The method of claim 12, wherein calculating comprises associating a field specified in a derivative trade record, associating a field specified in the derivative contract record, netting two or more amounts payable by the second party to the first party for the derivative contract, the two or more amounts payable having the same payment date, or any combination thereof.

24. The method of claim 12, wherein the derivative contract is accessible to a custodian or administrator of the first or second party to make the payment.

25. The method of claim 24, wherein the custodian or administrator acts on behalf of the first or second party to the derivative contract in making the payments.

26. A computer program product, tangibly embodied in an information carrier, the computer program product including instructions being operable to cause a data processing apparatus to:
receive a first signal from a first party of a derivative contract, the first signal indicative of a request to initiate processing of a payment owed on the derivative contract, the derivative contract being in an unconfirmed state;
transmit a second signal to a second party of the derivative contract, the second signal indicative of a request for acceptance of processing of payments;
in response to receiving a third signal indicative of an acceptance from the second party, verifying that the first derivative contract record and second derivative contract record are associated with the same derivative contract or the first derivative contract record and second derivative contract record correspond to a common derivative contract event;
transmit a fourth signal to the first party and second party of the derivative contract; and
calculate a payment owed between the first party and second party based on the derivative contract.

27. A system comprising:
a first data processing means for receiving a first signal from a first party of a derivative contract, the first signal indicative of a request to initiate processing of a payment owed on the derivative contract, the derivative contract being in an unconfirmed state;
a second data processing means for transmitting a second signal to a second party of the derivative contract, the second signal indicative of a request for acceptance of processing of payment;
a third data processing means receiving a third signal indicative of an acceptance from the second party;
a fourth data processing means for verifying that the first derivative contract record and second derivative contract record are associated with the derivative contract or the first derivative contract record and second derivative contract record correspond to a common derivative contract event;
a fifth data processing means for transmitting a fourth signal to the first party and second party of the derivative contract;
a sixth data processing means for calculating a payment owed between the first party and second party based on the derivative contract; and
a data storage means for storing trade information associated with an over the counter derivative contract.
